# EUROPÄISCHE PATENTSCHRIFT

(11) **EP 2 774 880 B1**
(45) Veröffentlichungstag und Bekanntmachung des Hinweises auf die Patenterteilung: **13.04.2016**
(21) Anmeldenummer: 14153735.7
(22) Anmeldetag: 04.02.2014
(51) Int. Cl.: B65G 57/06, B65G 57/24

(54) **Verfahren zum Umgang mit Artikeln**
Method for handling items
Procédé de manutention d'articles

(30) Priorität: 04.03.2013 DE 102013102113
(43) Veröffentlichungstag der Anmeldung: 10.09.2014
(73) Patentinhaber: Krones Aktiengesellschaft, 93073 Neutraubling (DE)
(72) Erfinder: Beer Erhard, 93073 Neutraubling (DE); Osterhammer Martin, 93073 Neutraubling (DE); Schweighofer Georg, 93073 Neutraubling (DE)
(74) Vertreter: Benninger, Johannes

(56) Entgegenhaltungen:
- EP-A1- 2 537 783
- EP-A2- 0 257 447
- WO-A1-2010/086292
- US-A- 4 205 934

## Beschreibung

Die vorliegende Erfindung betrifft ein Verfahren zum Umgang mit Artikeln vermittels einer einen Jalousiekopf mit zwei gegenläufigen Jalousien eines Jalousieverschlusses umfassenden Beladestation gemäß dem Oberbegriff des Anspruchs 1. Insbesondere betrifft die Erfindung ein zum Betrieb einer eine Beladestation mit einem Jalousiekopf mit zwei gegenläufigen Jalousien eines Jalousieverschlusses umfassenden Vorrichtung geeignetes Verfahren.

Der Umgang mit Artikeln sieht häufig vor, diese einzeln oder zu mehreren gleichzeitig beispielsweise zu Artikellagen gruppiert an einem Stapelplatz zu einem Stapel aufzustapeln, in welchem Stapel die Artikel oder Artikellagen dann Stapellagen bilden.

Bei den Artikeln kann es sich beispielsweise um Objekte, wie etwa verpackte oder unverpackte Gegenstände, Behälter, Kartonagen, oder um Gebinde aus mehreren Objekten handeln, wobei die Objekte eines Gebindes beispielsweise vermittels einer Umreifung, einer Umverpackung, wie etwa einer Umwickelung, einem Schrumpfschlauch oder eines Kartons oder eines Tragegestells zusammengehalten werden, um nur einige denkbare Ausgestaltungen zu nennen.

Zum Umgang mit einzelnen oder mehreren, beispielsweise zu Artikellagen gruppiert, relativ zueinander angeordneten Artikeln, die beispielsweise zu einem Stapel aufzustapeln oder von einem Stapel zu entstapeln sein können, wie dies beispielsweise beim Palettieren oder Entpalettieren der Fall sein kann, sind so genannte Palettierköpfe bekannt.

Ein Palettierkopf umfasst im Wesentlichen einen Tragrahmen mit:
- zwei gegenüberliegenden Schmalseiten,
- zwei die gegenüberliegenden Schmalseiten beidseitig miteinander verbindenden, gegenüberliegende Stirnseiten,
- einer die beiden gegenüberliegenden Schmalseiten und die beiden gegenüberliegende Stirnseiten miteinander verbindenden Oberseite, an der oder an wenigstens einer der beiden Schmalseiten eine Verbringungsvorrichtung, beispielsweise mindestens ein an einem horizontalen Querträger verfahrbarer Schlitten oder ein Hubwerk oder ein mehrachsig beweglicher Roboterarm, um nur einige denkbare Ausgestaltungen zu nennen, angreift, mit welcher der Palettierkopf von einer Beladeposition in eine Entladeposition bewegt werden kann,
- einer ebenfalls die beiden gegenüberliegenden Schmalseiten und die beiden gegenüberliegende Stirnseiten miteinander verbindenden Unterseite mit einer vermittels einer oder zweier an den Schmalseiten beweglich geführter Jalousien eines Jalousieverschlusses verschließ bzw. abdeckbaren Be- und Entladeöffnung, die in geschlossenem Zustand von der einen Jalousie vollständig oder von den zwei gegenläufig beweglichen Jalousien beispielsweise jeweils zur Hälfte abgedeckt ist und die in geöffnetem Zustand frei liegt,
- einem zwischen der Ober- und der Unterseite, den beiden Schmalseiten und den beiden Stirnseiten beherbergten und durch die Be- und Entladeöffnung zugänglichen Aufnahmeraum für einen oder mehrere Artikel oder eine oder mehrere Artikellagen, wobei Artikel oder Artikellagen durch die Be- und Entladeöffnung in den Aufnahmeraum ein- und wieder ausgebracht werden,
sowie einen Jalousieverschluss mit:
- mindestens einem Paar an den beiden gegenüberliegenden Schmalseiten beidseits der an der Unterseite befindlichen Be- und Entladeöffnung voneinander beabstandet angeordnete Führungseinrichtungen zur beweglichen Führung einer oder zweier Jalousien an den beiden Schmalseiten, wobei einer Jalousie ein Paar einander gegenüberliegend voneinander beabstandet angeordnete Führungseinrichtungen zugeordnet ist,
- einer oder zwei Jalousien bestehend aus mehreren parallel zueinander angeordneten Lamellen, die jeweils mit ihren Enden in an den beiden gegenüberliegenden Schmalseiten angeordnete Führungseinrichtungen eingehängt bzw. mit diesen verbunden und entlang einer durch die Führungseinrichtungen vorgegebenen Führungsbahn zwischen zwei dem geschlossenen und dem geöffneten Zustand der Be- und Entladeöffnung entsprechenden Stellungen, einer Offenstellung, bei dem die Be- und Entladeöffnung frei durchgängig ist, und einer Schließstellung, bei der die Be- und Entladeöffnung durch die eine oder die zwei gegenläufigen Jalousien geschlossen ist, beweglich sind, wobei in der Schließstellung in den Aufnahmeraum eingebrachte Artikel oder Artikellagen von dem einen oder zwei gegenläufigen, in der Schließstellung beispielsweise in der Mitte der Be- und Entladeöffnung aneinander anstoßenden Jalousien getragen werden,
und
- mindestens eine auf den wenigstens einen Jalousieverschluss einwirkenden, beispielsweise elektromotorisch oder pneumatisch oder via der Verbringungsvorrichtung antreib- oder betätigbare Betätigungseinrichtung zur Bewegung der mindestens einen Jalousie des Jalousieverschlusses von deren Offenstellung in deren Schließstellung und umgekehrt.

Bei Palettierköpfen kann es vorkommen, dass bei ihnen beim Schließen der einen oder der zwei gegenläufigen Jalousien die Artikel beispielsweise innerhalb einer Artikellage verschoben werden. Dies ist vor allem bei Artikellagen in so genannter Kaminanordnung der Fall, bei welcher die Artikel um eine innerhalb der Artikellage befindliche, beispielsweise zentrale, freibleibende Stelle gruppiert sind.

Neben der beschriebenen Ausgestaltung eines Palettierkopfs ist eine nachfolgend als Jalousiekopf bezeichnete Ausgestaltung bekannt. Ein grundsätzlich gleich wie ein Palettierkopf aufgebauter Jalousiekopf unterscheidet sich dabei von einem Palettierkopf dadurch, dass ein Jalousiekopf im Gegensatz zu einem Palettierkopf anstelle einer gemeinsamen Be- und Entladeöffnung eine an seiner Unterseite angeordnete, vermittels einer oder zweier gegenläufiger Jalousien eines Jalousieverschlusses verschließbare Entladeöffnung sowie eine an zumindest einer seiner Stirnseiten angeordnete Beladeöffnung aufweist. Der Aufbau und die Anordnung des Jalousieverschlusses an der bei einem Jalousiekopf lediglich als Entladeöffnung dienenden Öffnung an der Unterseite entspricht dabei grundsätzlich dem eines Palettierkopfs. Die Steuerung des Öffnens und Schließens dieser Öffnung vermittels des Jalousieverschlusses hingegen ist unterschiedlich, da bei einem Palettierkopf die Öffnung an der Unterseite sowohl zum Beladen, als auch zum Entladen offen sein muss. Bei einem Jalousiekopf hingegen werden Artikel oder Artikellagen in der Beladeposition des Jalousiekopfs in Schließstellung des Jalousieverschlusses durch die Beladeöffnung in den Aufnahmeraum eingebracht, wobei sie über die geschlossene eine oder zwei gegenläufige Jalousien des Jalousieverschlusses geschoben werden, und in der Entladeposition des Jalousiekopfs durch die Entladeöffnung wieder aus diesem ausgebracht, wobei die eine oder zwei gegenläufige Jalousien des Jalousieverschlusses unter dem Artikel oder der Artikellage weggezogen werden.

Bei Palettier- und Jalousieköpfen mit nur einer Jalousie kann es vorkommen, dass beim Entladen des Palettier- oder Jalousiekopfs durch das Wegziehen der einen Jalousie in nur einer Richtung unter der gesamten Artikellage hindurch Artikel innerhalb von in Kaminanordnung gruppierter Artikellagen verschoben werden können.

Jalousieköpfe mit zwei gegenläufigen Jalousien hingegen weisen gegenüber Jalousieköpfen mit nur einer Jalousie sowie Palettierköpfen den wesentlichen Vorteil auf, dass mit ihnen auch mit Artikellagen umgegangen werden kann, die in Kaminanordnung aufzustapeln sind oder aus einer Kaminanordnung zu entstapeln sind, da bei ihnen die gegenläufig öffnenden Jalousien zuerst die innerhalb der Artikellage befindliche, beispielsweise zentrale, freibleibende Stelle freigeben, wodurch kein Artikel durch eine der beiden Jalousien in diese freie Stelle hinein gezogen werden kann.

Palettier- und Jalousieköpfe können dabei grundsätzlich sowohl beim Entstapeln, dem so genannten Entladen, als auch beim Aufstapeln, dem so genannten Beladen, von Artikeln oder gruppierten Artikellagen von bzw. zu einem Stapel verwendet werden.

Ein oder mehrere Palettier- oder Jalousieköpfe sind dabei im Falle des Entladens Teil einer so genannten Entladestation bzw. im Falle des Beladens einer so genannten Beladestation.

Eine zum Beladen vorgesehene, eine Beladestation umfassende Vorrichtung unterscheidet sich hierbei im Wesentlichen von einer zum Entladen vorgesehenen, eine Entladestation umfassenden Vorrichtung dadurch, dass vor der Beladestation eine Gruppierung der Artikel stattfinden kann.

Bei der Gruppierung werden Artikel aus einem ein- oder mehrbahnig zulaufenden Artikelstrom auf einer beweglichen, beispielsweise zumindest abschnittsweise mit dem Artikelstrom bewegten, oder fest stehenden Bereitstellungsfläche immer wieder beispielsweise zu Artikellagen gruppiert, die daraufhin nach deren Vervollständigung weiter- oder abtransportiert werden, um Platz für eine neu zu gruppierende Gruppierung zu schaffen.

Das Gruppieren von Artikeln beispielsweise zu Artikellagen erfolgt besonders effektiv vermittels so genannter Gruppierstationen, die vollautomatisch betrieben sein können. Gruppierstationen können eine oder mehrere unter dem Begriff Manipulator zusammengefasste Drehstationen, Weichen und/oder auch ein- oder mehrachsige Handhabungsautomaten umfassen, welche auf einer Bereitstellungsfläche Artikel aus einem ein- oder mehrbahnig zulaufenden Artikelstrom immer wieder zu Artikellagen gruppieren, die daraufhin nach deren Vervollständigung abtransportiert werden, um Platz für eine neu zu gruppierende Artikellage zu schaffen.

Dabei werden die Artikel hinsichtlich deren Eingangsausrichtung und/oder - position im ein- oder mehrbahnig zulaufenden Artikelstrom sensorisch erfasst, um sie anschließend jeweils in eine Endausrichtung und -position entsprechend ihrer Anordnung in der durch die Gruppierung zu erzielenden Artikellage beispielsweise vermittels eines oder mehrerer Manipulatoren zu manipulieren.

Ist im Anschluss an die Gruppierung von Artikeln zu Artikellagen ein Beladen beispielsweise durch Aufstapeln der Artikellagen zu einem beispielsweise auf einer Palette aufstehenden Stapel vorgesehen, erfolgt der Weiter- oder Abtransport der gruppierten Artikellagen zu einer bereits erwähnten Vorrichtung, die eine Beladestation, vorzugsweise mit einem Jalousiekopf mit zwei gegenläufigen Jalousien eines Jalousieverschlusses umfasst.

Ein wesentlicher Kostenfaktor in der Verpackungstechnik und in der Verpackungsindustrie, bei der mit zu gruppierenden und gruppierten sowie aufgestapelten Artikeln umgegangen wird, ist die Taktung, mit der innerhalb möglichst kurzer Zeit mit möglichst vielen Artikeln umgegangen werden kann. Je kürzer die Taktung, desto höher ist dabei der Artikelumsatz und um so höher und damit besser ist die Auslastung der hierfür vorgesehenen Maschinen, Anlagen und Einrichtungen.

Die Taktung kann dabei als der Quotient der Anzahl von Artikeln oder Artikellagen zur Zeit, innerhalb der mit dieser Anzahl von Artikeln oder Artikellagen umgegangen wird, beschrieben werden.

Die Taktung ist dabei begrenzt durch die Bewegungen, die nötig sind, um mit einem Palettier- oder Jalousiekopf einer Beladestation die nach der Gruppierstation bereitstehenden Artikellagen zu übernehmen und an einem Stapelplatz zuoberst auf die oberste Stapellage aufzulegen.

Dabei ist es zunächst unerheblich, ob sich die Bereitstellungsfläche in so genannter bodenständiger Ausführung auf einem Niveau in Bodennähe, in so genannter mittelständiger Ausführung auf einem Niveau der Oberfläche einer beispielsweise auf einer Transporteinrichtung an einem Stapelplatz bereitgestellten Palette, oder in so genannter hochständiger Ausführung auf einem Niveau der Oberfläche beispielsweise einer als vorletztes oder als letztes an einem Stapelplatz zuoberst auf einen Stapel aufgelegten Artikellage befindet.

Zur Steigerung der Taktung beim Beladen ist denkbar oder könnte es sinnvoll sein, eine Transferstation zwischen Gruppierstation und Beladestation vorzusehen, die während des Verfahrens der Beladestation bzw. deren Palettier- oder Jalousiekopfs eine vertikalen Höhendifferenz zwischen der Bereitstellungsfläche der Gruppierstation und der obersten Stapellage von an einem Stapelplatz bis dato zu einem Stapel aufgestapelten Artikellagen bereits überbrückt, während die Beladestation noch mit dem Aufsetzen einer Artikellage als oberste Stapellage auf den Stapel oder mit der Rückführung deren Palettier- oder Jalousiekopfs vom letzten Aufsetzen einer Artikellage als oberste Stapellage auf den Stapel zu einem beispielsweise in seiner Höhe variablen Übergabeniveau beschäftigt ist. Zu dieser Überbrückung werden die gruppierten Artikel von der Bereitstellungsfläche auf eine Transferfläche der Transferstation verbracht, beispielsweise übergeschoben, oder im Falle einer beispielsweise vermittels Transport- und/oder Fördereinrichtungen, wie etwa Rollen- oder Bandförderern, verwirklichten beweglichen Ausführung der Bereitstellungsfläche und der Transferfläche durch Antrieb der Transport- und/oder Fördereinrichtungen transportiert. Anschließend verbringt die Transferstation die Transferfläche mit den darauf befindlichen Artikeln auf das Übergabeniveau, auf dem die Übergabe der auf die Transferfläche verbrachten, gruppierten Artikel von der Transferstation an die Beladestation stattfindet, beispielsweise dem Niveau der Oberfläche der obersten Stapellage von an einem Stapelplatz bis dato zu einem Stapel aufgestapelten Artikellagen. Ist gerade ein Stapel abtransportiert, kann dies das beispielsweise durch die Oberfläche einer Stapelfläche, beispielsweise die Oberfläche einer Palette, vorgegebene Niveau sein. Der Palettier- oder Jalousiekopf, dessen durch die Jalousie in deren Schließstellung gebildetes Niveau sich zunächst auf dem Niveau der Unterseite der zuletzt am Stapelplatz zuoberst abgelegten Artikellage befindet, verfährt derweil ebenfalls auf das anstehende Übergabeniveau. Dieses anstehende Übergabeniveau kann beispielsweise das zur Ablage der nächsten Artikellage am Stapelplatz nunmehr anstehende, durch das Niveau der Oberseite der obersten Stapellage gebildete Niveau sein. In jedem Fall lassen sich vermittels der Transferstation zumindest einige der Verfahrwege eines Palettier- oder Jalousiekopfs einer Beladestation verkürzen, einhergehend mit einer Zeitersparnis und dadurch einer höheren Taktung.

Nachteilig hieran wären hierbei zumindest in einigen Situationen auftretende Wartezeiten der Transferstation und des Palettier- oder Jalousiekopfs der Beladestation aufeinander, bis die auf der Transferstation befindliche Artikellage vom Palettier- oder Jalousiekopf übernommen werden kann.

Durch EP 0 257 447 A2 sind ein Verfahren gemäß dem Oberbegriff des Anspruchs 1 und eine Vorrichtung zum Umgang mit Artikeln bekannt, welche eine Beladestation mit einem eine Beladeöffnung und eine vermittels zweier gegenläufiger Jalousien eines Jalousieverschlusses verschließbare Entladeöffnung aufweisenden Jalousiekopf, eine Übergabefläche, auf der ein oder mehrere Artikel bereitstehen oder bereitgestellt werden, um an den Jalousiekopf übergeben zu werden, Mittel zur Übergabe eines oder mehrerer bereitstehender Artikel von der Übergabefläche an den Jalousiekopf, und eine Steuereinrichtung umfasst. Die Steuereinrichtung steuert die Übergabe und das Schließen der Jalousien unabhängig davon, ob sich die Jalousien in deren Offen- oder Schließstellung befinden, derart, dass mit der Übergabe begonnen wird, sobald der Jalousiekopf und die Übergabefläche das selbe Übergabeniveau einnehmen, und sich die Beladeöffnung des Jalousiekopfs unmittelbar vor der Übergabefläche befindet, und die Jalousien frühestmöglich geschlossen werden können. Die Steuereinrichtung startet spätestens gleichzeitig mit dem Beginn der Übergabe das Schließen der Jalousien. Dabei wird mit dem Schließen der Jalousie bis zur Übergabe der Artikel gewartet.

Durch EP 2 537 783 A1 ist eine Beladestation bekannt. Diese umfasst eine Bereitstellungsfläche auf einem konstanten, unteren Niveau, eine zwischen dem unteren Niveau und einem oberen Niveau vertikal bewegliche Hebefläche, sowie eine gemeinsam mit der Hebefläche vertikal bewegliche Übergabefläche, die darüber hinaus um eine quer zur Richtung des Überschiebens zwischen der Bereitstellungsfläche und der Hebefläche verlaufende horizontale Achse aus einer Vertikalstellung in eine Horizontalstellung und umgekehrt schwenkbar ist, und eine vertikal bewegliche Stapelfläche, auf der auf der Bereitstellungsfläche zu Artikellagen gruppierte Artikel als Stapellagen zu einem Stapel aufgestapelt werden. Die vertikal bewegliche Stapelfläche hält das durch eine Oberfläche einer Palette oder die Oberseite einer obersten, auf einem bis dato auf dieser aufgestapelten Stapels aufgelegten Stapellage gebildete Stapelniveau konstant auf dem oberen Niveau. Die Hebefläche überbrückt die Niveaudifferenz zwischen unterem und oberem Niveau. Die Übergabefläche übernimmt die Artikel von der Hebefläche auf dem oberen Niveau durch Verschwenken aus deren Vertikal- in deren Horizontalstellung. Übergabefläche und Hebefläche greifen dann kammartig ineinander. Anschließend werden die Artikel auf der Übergabefläche von der Hebefläche zum Stapelplatz übergeschoben und zuoberst auf einer Palette oder einem bis dato errichteten Stapel aufgelegt.

Durch US 4,205,934 ist bekannt, dass eine Transferfläche einer Transferstation bereits während des Verfahrens des Jalousiekopfs eine vertikale Höhendifferenz zwischen dem Niveau einer Bereitstellungsfläche einer Gruppierstation und einem Übergabeniveau überbrückt oder zu überbrücken beginnt, während eine Beladestation noch mit dem Aufsetzen einer Artikellage als oberste Stapellage auf einen Stapel oder mit der Rückführung deren Jalousiekopfs vom letzten Aufsetzen einer Artikellage als oberste Stapellage auf den Stapel zum Übergabeniveau beschäftigt ist.

Der Erfindung liegt die Aufgabe zu Grunde, ein Verfahren zum Umgang mit Artikeln vermittels einer einen Jalousiekopf mit zwei gegenläufigen Jalousien eines Jalousieverschlusses umfassenden Beladestation zu schaffen, welches einen Umgang mit Artikeln oder Artikellagen in einer möglichst hohen Taktung ermöglicht.

Die Aufgabe wird gelöst durch die Merkmale des unabhängigen Anspruchs.

Weitere vorteilhafte Ausgestaltungen werden durch die Unteransprüche beschrieben.

Die Erfindung ist geeignet zum Betrieb einer Vorrichtung zum Umgang mit Artikeln, welche eine beispielsweise Eingangs beschriebene Beladestation mit einem ebenfalls beispielsweise Eingangs beschriebenen Jalousiekopf mit zwei gegenläufigen Jalousien eines Jalousieverschlusses umfasst. Die Vorrichtung umfasst darüber hinaus eine Übergabefläche, auf der ein oder mehrere, beispielsweise vorzugsweise vermittels einer beispielsweise auch Eingangs beschriebenen Gruppierstation zu Artikellagen gruppierte Artikel bereitstehen oder bereitgestellt werden, um an den Jalousiekopf übergeben zu werden. Ferner umfasst die Vorrichtung Mittel zur Übergabe eines oder mehrerer bereitstehender, beispielsweise zu Artikellagen gruppierter Artikel von der Übergabefläche an den Jalousiekopf.

Die Mittel zur Übergabe können beispielsweise einen oder mehrere Schieber und/oder eine vermittels einer Transport- und/oder Fördereinrichtung, wie etwa eines Rollen- oder Bandförderers verwirklichte und dadurch beweglich ausgeführte Übergabefläche umfassen, um nur einige denkbare Ausgestaltungen zu nennen.

Die Vorrichtung umfasst eine Steuereinrichtung, welche die auch als Überschieben bezeichnete Übergabe unabhängig davon, ob sich die Jalousien des Jalousieverschlusses des Jalousiekopfs in deren Offen- oder Schließstellung befinden, derart steuert, dass mit der Übergabe begonnen wird, sobald das durch die Oberfläche der Jalousien in Schließstellung gebildete Niveau des Jalousiekopfs mit dem durch die Oberfläche der Übergabefläche gebildeten Niveau der Übergabefläche übereinstimmt und sich die Beladeöffnung des Jalousiekopfs frei von einem durch die zu übergebenden Artikel unüberwindbaren horizontalen Abstand unmittelbar vor der Übergabefläche befindet.

Die Steuereinrichtung steuert darüber hinaus auch das Schließen der Jalousien derart, dass das Schließen der Jalousien spätestens gleichzeitig mit dem Beginn der Übergabe startet.

Können die Jalousien noch nicht geschlossen werden, beispielsweise weil es ansonsten zu einer Kollision käme, wird mit der Übergabe gewartet.

Mit anderen Worten steuert die Steuervorrichtung den Beginn des Schließens der Jalousien des Jalousiekopfs und den Beginn des Überschiebens der bereitstehenden Artikellage in den Jalousiekopf derart, dass beispielsweise bereits mit dem Beginn des Schließens der Jalousie oder noch während deren Schließens oder nach deren Schließens die beispielsweise durch Überschieben verwirklichte Übergabe gestartet wird, sobald sich Jalousiekopf und die bereitstehende Artikellage auf dem selben Niveau befinden.

Ein Niveau, bei dem das durch die Oberfläche der Jalousien in Schließstellung gebildete Niveau des Jalousiekopfs mit dem durch die Oberfläche der Übergabefläche gebildeten Niveau der Übergabefläche übereinstimmt, kann dabei als ein Übergabeniveau bezeichnet werden.

Unter den zuvor genannten Bedingungen startet die Übergabe jedoch vorzugsweise erst dann, wenn mit dem Schließen der Jalousie frühestmöglich begonnen werden kann. Dieser Aspekt kann beispielsweise wichtig sein, wenn die Jalousien noch nicht geschlossen werden können, beispielsweise weil es ansonsten zu einer Kollision beispielsweise mit gerade an einem Stapelplatz aufgelegten Artikeln kommen könnte.

Sich hierdurch ergebende Vorteile sind, dass durch eine Vorverlegung des Beginns des Überschiebens eine höhere Taktung erreicht werden kann, als wenn damit gewartet wird, bis die Jalousien des Jalousieverschlusses vollständig geschlossen sind. Ein Gewinn kann selbst dann erhalten werden, wenn der Beginn des Überschiebens während des Aufstapelns eines mehrlagigen Stapels nur bei einer oder bei zwei als Stapellagen auf den aufzustapelnden Stapel aufzulegenden Artikellagen früher startet. Es muss noch nicht einmal bei der Übergabe jeder Artikellage das Überschieben früher als beim Stand der Technik begonnen werden.

Der Jalousiekopf führt dabei beim Eingangs geschilderten Beladen vermittels einer Beladestation, bei dem an einem Stapelplatz Artikellage um Artikellage als Stapellagen zu einem Stapel aufgestapelt werden, vorzugsweise nur Vertikalbewegungen aus. Dadurch befindet sich die Beladeöffnung des Jalousiekopfs immer unmittelbar vor der Übergabefläche, sobald das durch die Oberfläche der Jalousien in Schließstellung gebildete Niveau des Jalousiekopfs mit dem durch die Oberfläche der Übergabefläche gebildeten Niveau der Übergabefläche übereinstimmt. Darüber hinaus werden dadurch Verfahrwege des Jalousiekopfs verkürzt, wodurch wiederum eine höhere Taktung erreicht wird.

Zumindest diejenige Jalousie des Jalousieverschlusses, die bei der Bewegung der beiden gegenläufigen Jalousien des Jalousieverschlusses von deren Schließstellung in deren Offenstellung zu derjenigen Stirnseite hin weggezogen wird, an der sich die Beladeöffnung des Jalousiekopfs befindet, durch welche Beladeöffnung hindurch mindestens ein auf der Übergabefläche bereitstehender Artikel bei der Übergabe in den Aufnahmeraum des Jalousiekopfs eingebracht wird, wird bei der Bewegung von der Schließstellung in die Offenstellung vorzugsweise nach unten hin, unter das durch die Oberfläche der Jalousien in Schließstellung gebildete Niveau des Jalousiekopfs umgelenkt oder nach unten hin aufgewickelt oder nach unten hin aufgerollt.

Eine vorteilhafte Ausgestaltung der Vorrichtung sieht vor, dass die Übergabefläche durch eine Bereitstellungsfläche einer Gruppierstation gebildet ist. Hierdurch kann eine eine solche Vorrichtung und eine dieser vorgelagerte Gruppierstation umfassende Anlage vereinfacht mit weniger Baugruppen und dadurch auch verkürzt ausgeführt werden.

Dabei sowie bei den anderen Ausführungen ist denkbar, dass die Vorrichtung eine Einrichtung zum Niveauausgleich eines Stapels umfasst, welche Einrichtung die Oberfläche einer obersten Stapellage von an einem Stapelplatz bis dato zu einem Stapel aufgestapelten Artikellagen immer auf gleichen Niveau, beispielsweise auf dem Niveau der Übergabefläche und/oder der Bereitstellungsfläche einer Gruppierstation hält, indem der Stapel selbst vertikal verfahren wird. Dies kann beispielsweise bei bodenständiger Ausführung dadurch verwirklicht sein, indem der Stapel auf einer unterhalb des Bodenniveaus angeordneten Hubeinrichtung abgestützt ist.

Ist gerade ein Stapel abtransportiert, kann die Oberfläche einer Stapelfläche, beispielsweise die Oberfläche einer Palette, auf dem vorgegebenen Niveau gehalten werden.

Alternativ kann die Übergabefläche durch eine Transferfläche einer Transferstation gebildet sein.

In diesem Fall kann die Vorrichtung eine Transferstation umfassen, welche beispielsweise zwischen einer Gruppierstation und der Beladestation vorgesehen sein kann. Die Transferstation überbrückt während des Verfahrens des Jalousiekopfs der Beladestation bereits eine vertikale Höhendifferenz beispielsweise zwischen dem Niveau einer Bereitstellungsfläche der Gruppierstation und einem beispielsweise in seiner Höhe variablen Übergabeniveau, auf dem die Übergabe der auf die Transferfläche verbrachten, gruppierten Artikel von der Transferstation an die Beladestation stattfindet, während die Beladestation noch mit dem Aufsetzen einer Artikellage als oberste Stapellage auf den Stapel oder mit der Rückführung deren Jalousiekopfs vom letzten Aufsetzen einer Artikellage als oberste Stapellage auf den Stapel zum Übergabeniveau beschäftigt ist. Das Übergabeniveau kann beispielsweise auf dem Niveau der Oberfläche einer obersten Stapellage von an einem Stapelplatz bis dato zu einem Stapel aufgestapelten Artikellagen liegen. Zur Überbrückung des Niveauunterschieds vermittels der Transferstätion werden die gruppierten Artikel von der Bereitstellungsfläche auf eine Transferfläche der Transferstation verbracht, beispielsweise übergeschoben, oder im Falle einer beispielsweise vermittels Transport- und/oder Fördereinrichtungen, wie etwa Rollen- oder Bandförderern, verwirklichten beweglichen Ausführung der Bereitstellungsfläche und der Transferfläche durch Antrieb der Transport- und/oder Fördereinrichtungen transportiert. Anschließend verbringt die Transferstation die Transferfläche mit den darauf befindlichen Artikeln auf das vorzugsweise variable Übergabeniveau, auf dem die Übergabe der auf die Transferfläche verbrachten, gruppierten Artikel von der Transferstation an die Beladestation stattfindet, beispielsweise auf das Niveau der Oberfläche der obersten Stapellage von an einem Stapelplatz bis dato zu einem Stapel aufgestapelten Artikellagen oder auf das nächsthöhere Niveau, falls der Jalousiekopf gerade mit einer Artikellage beladen und noch nicht damit fertig oder gerade noch dabei ist, diese als weitere Stapellage auf einen Stapel aufzulegen, oder auf ein Startniveau, wird eine solche noch abzulegende Artikellage die letzte, oberste eines Stapels sein, der daraufhin abtransportiert wird, um den Stapelplatz für einen neuen Stapel freizugeben. Ist gerade ein Stapel abtransportiert, kann dies Startniveau das beispielsweise durch die Oberfläche einer Stapelfläche, beispielsweise die Oberfläche einer Palette, vorgegebene Niveau sein. Der Jalousiekopf, dessen durch die Oberfläche der Jalousien des Jalousieverschlusses in dessen Schließstellung gebildetes Niveau sich zunächst auf dem Niveau der Unterseite der zuletzt am Stapelplatz zuoberst abgelegten Artikellage befindet, kann derweil auf das Übergabenniveau verfahren, das beispielsweise das zur Ablage der nächsten Artikellage am Stapelplatz nunmehr anstehende, durch das Niveau der Oberseite der obersten Stapellage gebildete Niveau sein kann.

Ein Vorteil einer Ausführung mit Transferstation ist, dass sich vermittels der Übergabe der Artikellagen von der Transferfläche an den Jalousiekopf der Beladestation auf einem vorzugsweise variablen Übergabeniveau zumindest einige der Verfahrwege des Jalousiekopfs der Beladestation verkürzen lassen, einhergehend mit einer Zeitersparnis und dadurch einer höheren Taktung.

Ein zusätzlicher Vorteil dieser Ausgestaltung der Vorrichtung mit einer Transferstation ist, dass hierbei zur Steigerung der Taktung darauf verzichtet werden kann, die Oberfläche der obersten Stapellage von an einem Stapelplatz bis dato zu einem Stapel aufgestapelten Artikellagen immer auf gleichen Niveau, beispielsweise auf dem Niveau der Bereitstellungsfläche zu halten, indem der Stapel selbst vertikal verfahren werden kann.

Beispielsweise bei einer Ausführung der Vorrichtung mit einer Transferstation kann das Übergabeniveau variabel sein.

Die Vorrichtung kann einen Zwischenlagengreifer umfassen, der mit jeder Bewegung der Jalousien aus deren Offen- in deren Schließstellung eine Zwischenlage beispielsweise von einem Zwischenlagenstapel übernimmt, die dann auf die bis dato zuoberste Stapellage unter eine neue, zuoberst auf einen Stapel aufzulegende Artikellage abgelegt wird.

Wichtig ist hervorzuheben, dass eine gegebenenfalls vorgesehene Betätigungsvorrichtung für den Jalousieverschluss wahlweise Bestandteil des Jalousiekopfs oder des Jalousieverschlusses sein kann. Alternativ kann das Öffnen und Schließen der zwei gegenläufigen Jalousien des Jalousieverschlusses vermittels einer an der Oberseite oder an wenigstens einer der beiden Schmalseiten des Jalousiekopfs angreifenden Verbringungsvorrichtung betätigt sein.

Die Erfindung betrifft ein Verfahren zum Umgang mit Artikeln vermittels einer einen beispielsweise Eingangs beschriebenen Jalousiekopf mit zwei gegenläufigen Jalousien eines Jalousieverschlusses umfassenden, ebenfalls beispielsweise Eingangs beschriebenen Beladestation sowie einer Übergabefläche mit zumindest zeitweilig darauf bereitstehenden, beispielsweise vermittels einer auch Eingangs beschriebenen Gruppierstation zu Artikellagen gruppierten und zur Übergabe an den Jalousiekopf vorgesehenen Artikeln. Von der Übergabefläche aus werden auf ihr bereitstehende, beispielsweise zu Artikellagen gruppierte Artikel an den Jalousiekopf übergeben, der diese dann jeweils als eine Stapellage an einem Stapelplatz zu einem Stapel aufstapelt.

Das Verfahren sieht vor, einen oder mehrere als eine Stapellage in einen aufzustapelnden Stapel einzubringende, beispielsweise zu einer Artikellage gruppierte Artikel auf einer Übergabefläche bereitzustellen.

Das Verfahren sieht ferner bevorzugt vor, spätestens sobald eine Übergabe eines oder mehrerer, beispielsweise zu einer Artikellage gruppierter Artikel abgeschlossen ist, erneut einen oder mehrere, beispielsweise zu einer Artikellage gruppierte Artikel auf der Übergabefläche bereitzustellen.

Dabei kann vorgesehen sein, sobald die Übergabefläche frei von einem oder mehreren zuvor auf der Übergabefläche bereitgestellten Artikeln ist, sofort einen oder mehrere Artikel erneut auf ihr bereitzustellen.

Alternativ kann vorgesehen sein, dass die erneute Bereitstellung zeitgleich oder zumindest unter zeitlicher Überschneidung mit der Übergabe einer Artikellage von der Übergabefläche an den Jalousiekopf erfolgt.

Darüber hinaus sieht das Verfahren vor, den oder die auf der Übergabefläche bereitstehenden Artikel an den Jalousiekopf beispielsweise durch Überschieben durch die seitliche Beladeöffnung in den Aufnahmeraum des Jalousiekopfs zu übergeben, sobald das durch die Oberfläche der Jalousien in Schließstellung gebildete Niveau des Jalousiekopfs mit dem durch die Oberfläche der Übergabefläche gebildeten Niveau der Übergabefläche übereinstimmt und sich die Beladeöffnung des Jalousiekopfs frei von einem durch die zu übergebenden Artikel unüberwindbaren horizontalen Abstand unmittelbar vor der Übergabefläche befindet.

Das Verfahren zeichnet sich ferner dadurch aus, dass mit der vorzugsweise durch Überschieben der bereitstehenden Artikel durch die Beladeöffnung in den Aufnahmeraum des Jalousiekopfs stattfindenden Übergabe unabhängig davon begonnen wird, ob sich die Jalousien des Jalousieverschlusses des Jalousiekopfs in deren Offen- oder Schließstellung befinden.

Außerdem sieht das Verfahren vor, das Schließen der Jalousien derart zu steuern, dass das Schließen der Jalousien spätestens gleichzeitig mit dem Beginn der Übergabe startet.

Können die Jalousien noch nicht geschlossen werden, beispielsweise weil es ansonsten zu einer Kollision käme, sieht das Verfahren vor, mit der Übergabe zu warten.

Die Übergabe startet demnach vorzugsweise erst dann, wenn mit dem Schließen der Jalousie frühestmöglich begonnen werden kann. Dieser Aspekt kann beispielsweise wichtig sein, wenn die Jalousien noch nicht geschlossen werden können, beispielsweise weil es ansonsten zu einer Kollision beispielsweise mit gerade an einem Stapelplatz aufgelegten Artikeln kommen könnte

Das Verfahren sieht demnach vor, den Beginn des Schließens der Jalousien des Jalousiekopfs und den Beginn des Überschiebens der bereitstehenden Artikellage in den Jalousiekopf derart zu steuern, dass beispielsweise bereits mit dem Beginn des Schließens der Jalousie oder noch während deren Schließens oder nach deren Schließens die beispielsweise durch Überschieben verwirklichte Übergabe gestartet wird, sobald sich Jalousiekopf und die bereitstehende Artikellage auf dem selben Niveau befinden.

Mit anderen Worten erlaubt das Verfahren eine Überschneidung der Übergabe eines oder mehrerer auf der Übergabefläche bereitstehender Artikel an den Jalousiekopf mit dem Schließen der Jalousien des Jalousieverschlusses des Jalousiekopfs, indem vorgesehen ist, den Beginn der Übergabe mit dem Beginn des Schließens zuzulassen.

Dabei startet der Beginn der Übergabe vorzugsweise frühestens mit dem Beginn des Schließens der Jalousien des Jalousiekopfs, jedoch vorzugsweise noch bevor die Jalousien vollständig deren Schließstellung erreichen.

Das Verfahren zeichnet sich demnach dadurch aus, dass bereits mit dem Beginn des Schließens der Jalousien das Überschieben gestartet wird, sobald sich Jalousiekopf und die bereitstehende Artikellage auf dem selben Niveau befinden und mit dem Schließen der Jalousien frühestmöglich begonnen werden kann, beispielsweise wenn eine Kollisionsbereich verlassen ist.

Sich hierdurch ergebende Vorteile sind, dass durch eine Vorverlegung des Beginns des Überschiebens eine höhere Taktung erreicht werden kann, als wenn damit gewartet wird, bis die Jalousien des Jalousieverschlusses vollständig geschlossen sind. Ein Gewinn kann selbst dann erhalten werden, wenn der Beginn des Überschiebens während des Aufstapelns eines mehrlagigen Stapels nur bei einer oder bei zwei als Stapellagen auf den aufzustapelnden Stapel aufzulegenden Artikellagen früher startet. Es muss noch nicht einmal bei der Übergabe jeder Artikellage das Überschieben früher als beim Stand der Technik begonnen werden.

Ein Niveau, bei dem das durch die Oberfläche der Jalousien in Schließstellung gebildete Niveau des Jalousiekopfs mit dem durch die Oberfläche der Übergabefläche gebildeten Niveau der Übergabefläche übereinstimmt, kann dabei als ein Übergabeniveau bezeichnet werden.

Eine vorteilhafte Ausgestaltung des Verfahrens zeichnet sich dadurch aus, dass der Jalousiekopf zum Aufstapeln von Stapellagen an einem Stapelplatz zu einem Stapel zwischen zwei aufeinanderfolgenden Übergaben von auf der Übergabefläche bereitgestellter Artikel lediglich Vertikalbewegungen ausführt. Hierdurch werden besonders kurze und schnelle Verfahrwege ermöglicht, die eine hohe Taktung zulassen.

Um eine uneingeschränkte Zugänglichkeit der Beladeöffnung des Jalousiekopfs bereits sicherzustellen, wenn sich die Jalousien des Jalousieverschlusses noch nicht oder noch nicht vollständig in deren Schließstellung befinden, ist vorzugsweise vorgesehen, zumindest diejenige Jalousie, die bei ihrer Bewegung aus deren Schließstellung zu deren Offenstellung zu derjenigen Stirnseite hin weggezogen wird, an welcher sich die Beladeöffnung befindet, nach unten hin, unter das durch die Oberfläche der Jalousien in Schließstellung gebildete Niveau des Jalousiekopfs, umzulenken oder nach unten hin aufzuwickeln oder nach unten hin aufzurollen.

Das Verfahren sieht vor, die Übergabefläche selbst vertikal, beispielsweise dem Jalousiekopf entgegen zu bewegen, um auf ihr bereitgestellte Artikel schneller an den Jalousiekopf übergeben zu können. Die Übergabefläche kann dabei dem Jalousiekopf in dessen vertikaler Position entgegenfahren, beispielsweise zu einem variablen Übergabeniveau hin. Ein solches variables Übergabeniveau kann sich wie bereits zuvor sowohl zur dort erwähnten Vorrichtung, als auch zum bereits erwähnten Verfahren oder Teilen hiervon beschrieben ergeben bzw. hierdurch gebildet sein.

Hiernach sieht das Verfahren eine Kombination einer Beladestation mit einer Transferstation vor, bzw. kann durch eine solche Kombination verwirklicht sein, wobei die Übergabe von Artikeln zwischen der Transferstation und der Beladestation bereits mit dem Beginn des Schließens der Jalousien des Jalousieverschlusses des Jalousiekopfs der Beladestation erfolgen kann, sobald sich eine die Übergabefläche bildende Transferfläche der Transferstation und der Jalousiekopf der Beladestation auf dem selben Niveau, beispielsweise einem variablen Übergabeniveau befinden, und sich die Beladeöffnung des Jalousiekopfs unmittelbar vor der Transferfläche befindet.

Das Verfahren sieht dabei eine niveaudifferenzfreie, synchrone, gleichgerichtete Vertikalbewegung der beispielsweise durch eine Transferfläche einer Transferstation gebildeten Übergabefläche und des Jalousiekopfs während des Überschiebens bzw. während der Übergabe eines oder mehrerer beispielsweise zu einer Artikellage gruppierten Artikel beispielsweise von einer Transferstation an die Beladestation vor. Beispielsweise können die Übergabefläche und der Jalousiekopf ein gemeinsames Übergabeniveau einnehmen, während die Artikel beispielsweise übergeschoben werden, welches Übergabeniveau sich während der Übergabe der Artikel ändert bzw. ändern kann und sich demnach die Übergabefläche und der Jalousiekopf auf gleichem Niveau befinden.

Vorteile gegenüber dem Stand der Technik sind unter Anderem eine wesentlich höhere erzielbare Taktung, da nicht auf das Schließen der Jalousien eines Jalousiekopfs einer Beladestation gewartet werden muss, sondern statt dessen bereits mit dem Beginn des Schließens beispielsweise eine Artikellage an den Jalousiekopf übergeben werden kann.

Weitere Vorteile gegenüber dem Stand der Technik sind eine wesentlich höhere Auslastung von Produktionslinien, an deren Ende Artikel zu Stapeln aufgestapelt werden.

Zusätzliche Vorteile gegenüber dem Stand der Technik sind eine höhere Leistungsfähigkeit von Produktionslinien, an deren Ende Artikel zu Stapeln aufgestapelt werden.

Im Folgenden sollen Ausführungsbeispiele die Erfindung und ihre Vorteile anhand der beigefügten Figuren näher erläutern. Darin bezeichnen gleiche Bezugszeichen gleiche oder gleich wirkende Elemente. Ferner werden der Übersicht halber nur Bezugszeichen in den einzelnen Figuren dargestellt, die für die Beschreibung der jeweiligen Figur erforderlich sind. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

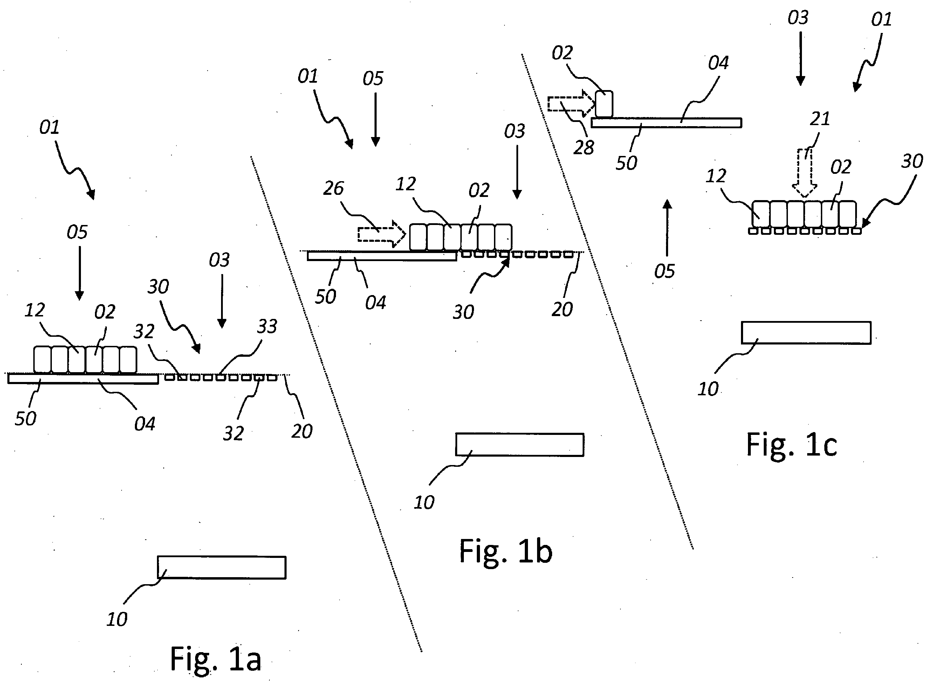

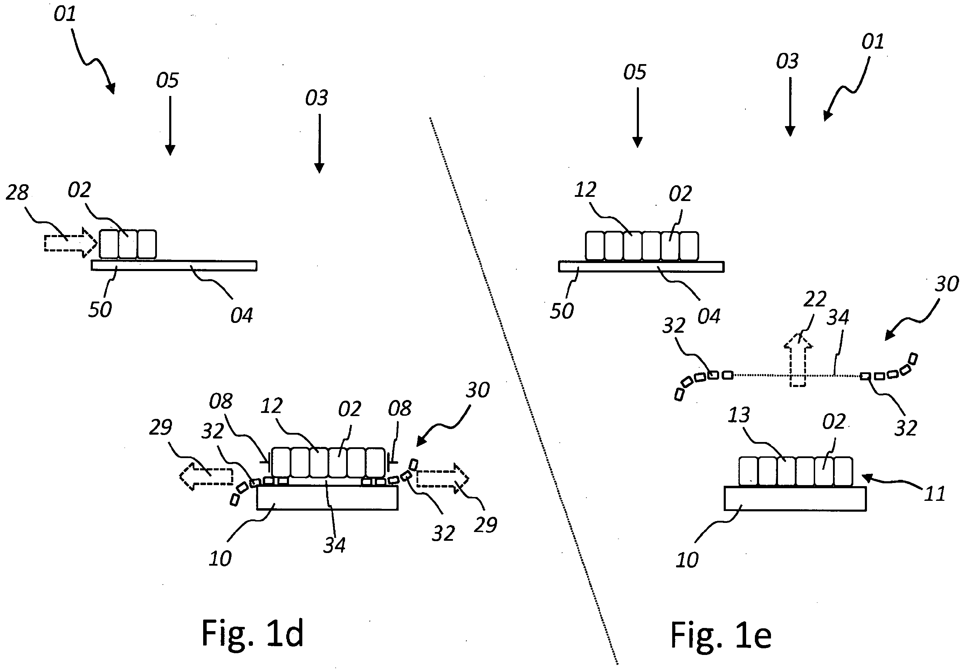

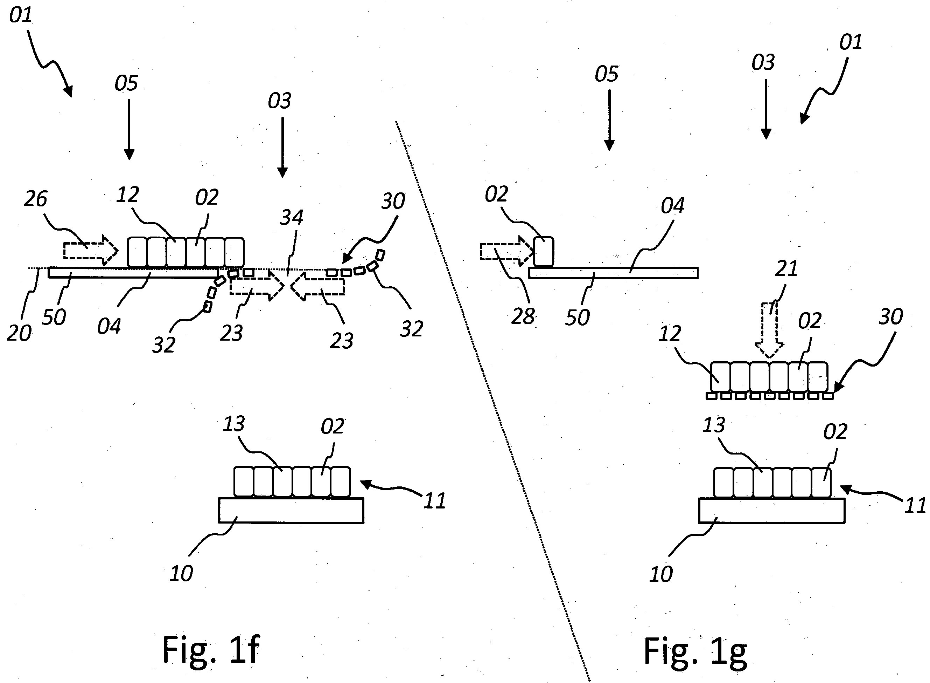

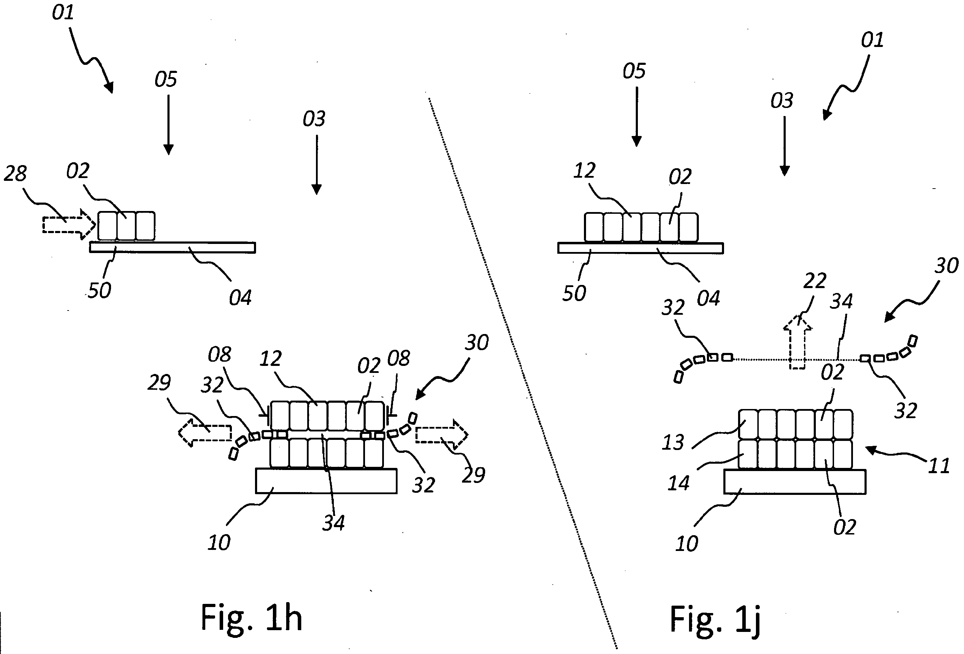

- Figur 1: ein erstes Ausführungsbeispiel einer Vorrichtung zum Umgang mit Artikeln, welche eine Beladestation mit einem eine Beladeöffnung und eine vermittels zweier gegenläufiger Jalousien eines Jalousieverschlusses verschließbare Entladeöffnung aufweisenden Jalousiekopf, eine Übergabefläche, auf der ein oder mehrere Artikel bereitstehen oder bereitgestellt werden, um an den Jalousiekopf übergeben zu werden, sowie Mittel zur Übergabe bereitstehender Artikel von der Übergabefläche an den Jalousiekopf umfasst und die vermittels einer Steuereinrichtung derart gesteuert ist, dass sie ein in Figur 1a) bis Figur 1j) in seinem Ablauf dargestelltes Verfahren zum Umgang mit Artikeln vermittels einer einen Jalousiekopf umfassenden Beladestation sowie einer Übergabefläche mit zumindest zeitweilig darauf bereitstehenden und zur Übergabe an den Jalousiekopf vorgesehenen Artikeln gemäß eines ersten Ausführungsbeispiels ausführt.

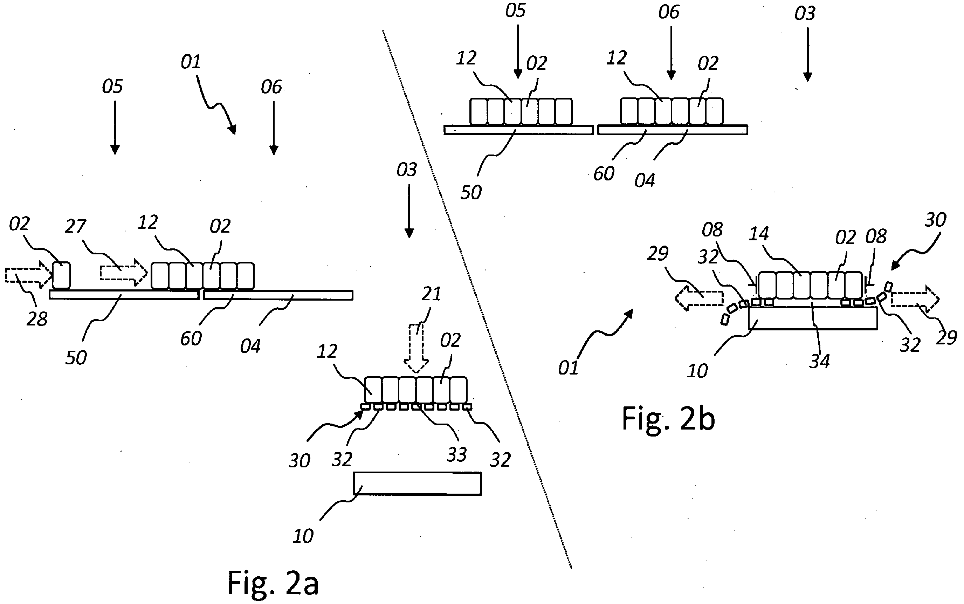

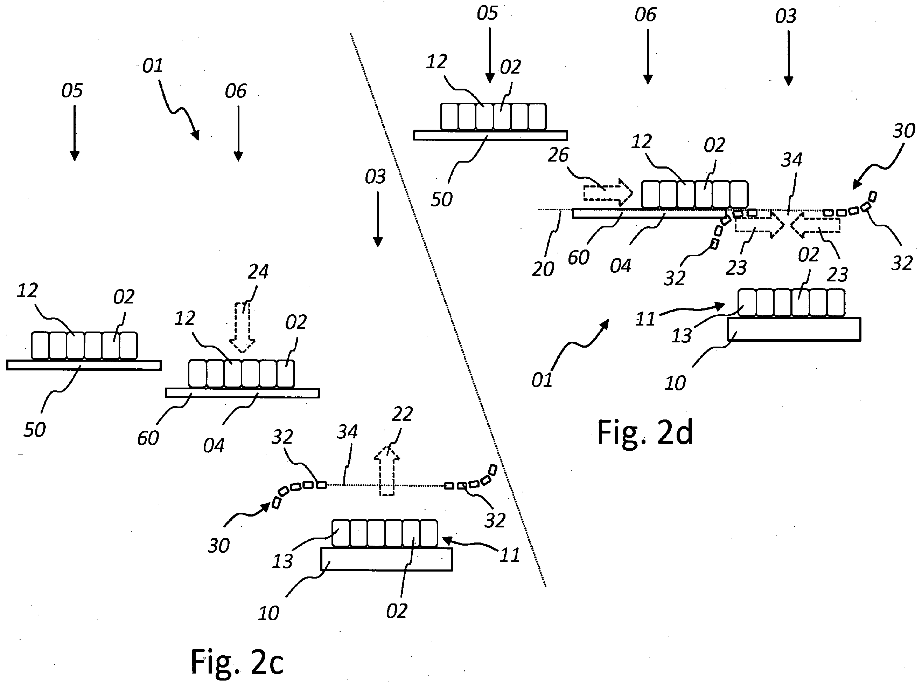

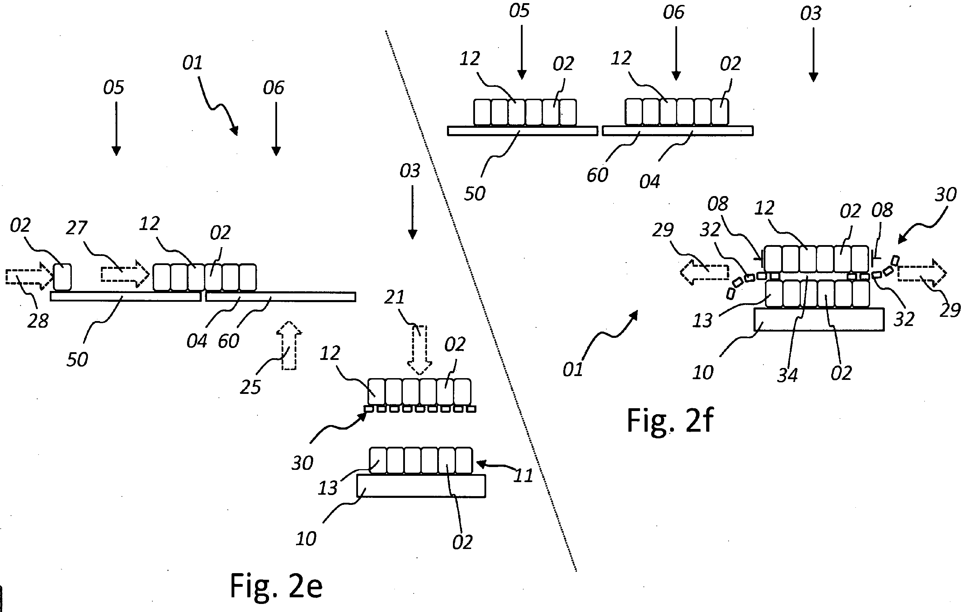

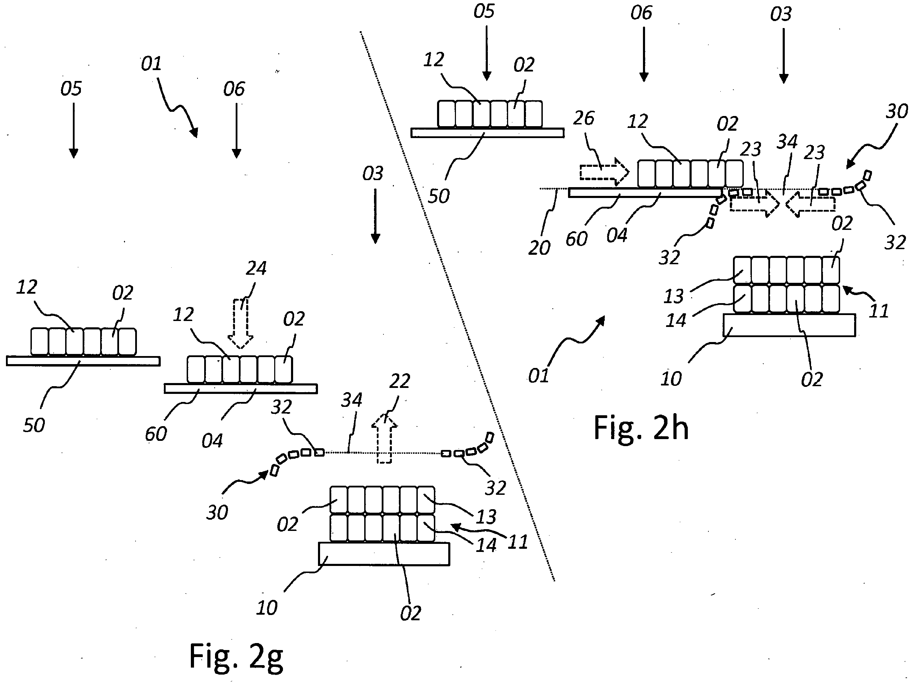

- Figur 2: ein zweites Ausführungsbeispiel einer Vorrichtung zum Umgang mit Artikeln, welche eine Beladestation mit einem eine Beladeöffnung und eine vermittels zweier gegenläufiger Jalousien eines Jalousieverschlusses verschließbare Entladeöffnung aufweisenden Jalousiekopf, eine Übergabefläche, auf der ein oder mehrere Artikel bereitstehen oder bereitgestellt werden, um an den Jalousiekopf übergeben zu werden, sowie Mittel zur Übergabe bereitstehender Artikel von der Übergabefläche an den Jalousiekopf umfasst und die vermittels einer Steuereinrichtung derart gesteuert ist, dass sie ein in Figur 2a) bis Figur 2h) in seinem Ablauf dargestelltes Verfahren zum Umgang mit Artikeln vermittels einer einen Jalousiekopf umfassenden Beladestation sowie einer Übergabefläche mit zumindest zeitweilig darauf bereitstehenden und zur Übergabe an den Jalousiekopf vorgesehenen Artikeln gemäß eines zweiten Ausführungsbeispiels ausführt.

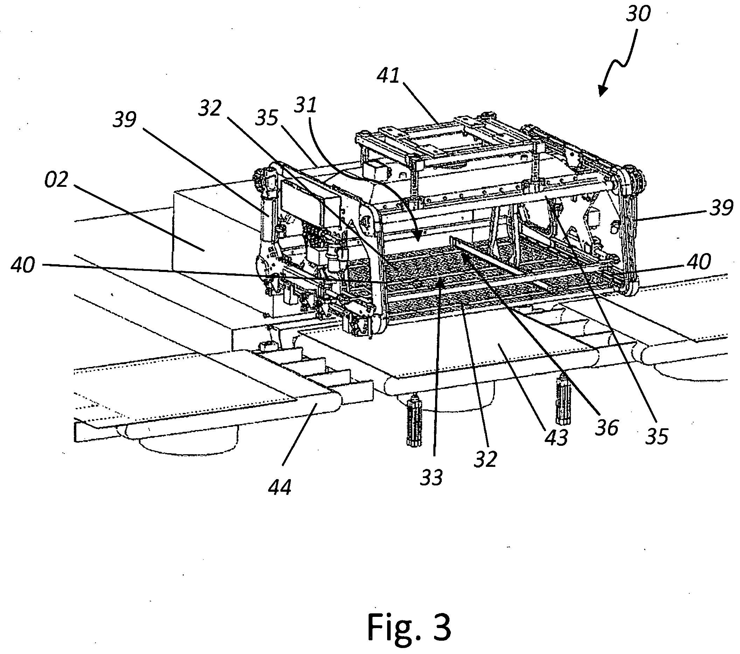

- Figur 3: ein erstes Ausführungsbeispiel eines Jalousiekopfs in einer perspektivischen Ansicht.

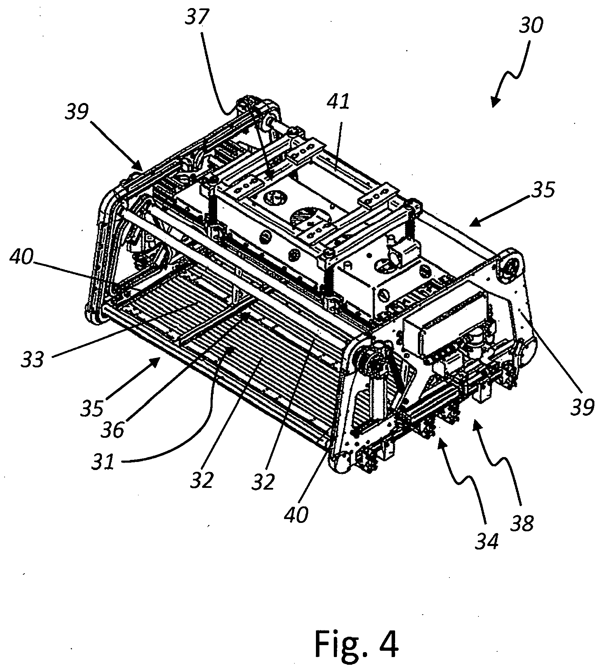

- Figur 4: ein zweites Ausführungsbeispiel eines Jalousiekopfs in einer perspektivischen Ansicht.

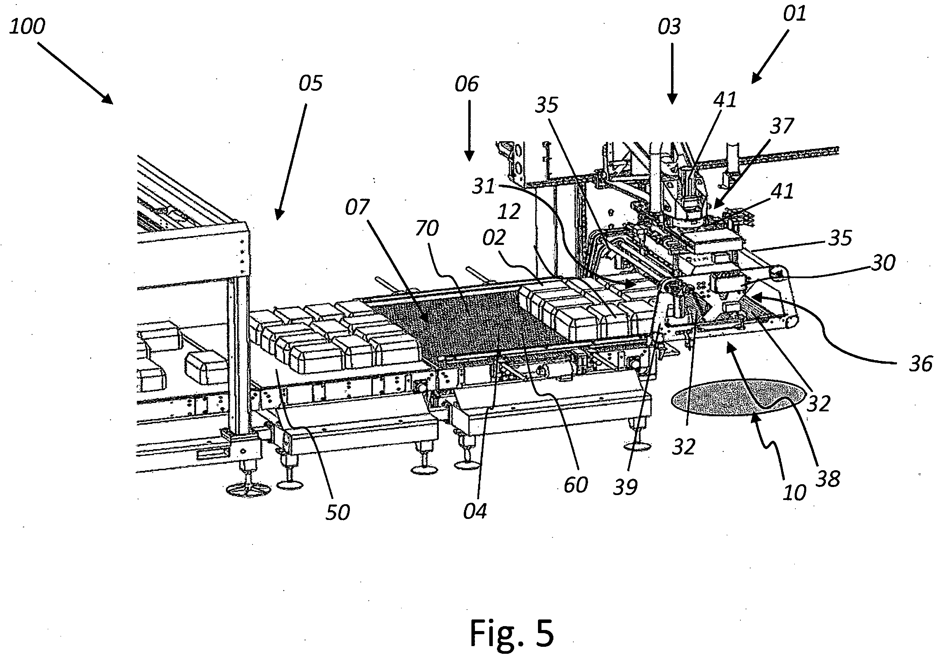

- Figur 5: eine Anlage in einer perspektivischen Ansicht, die eine Gruppierstation und eine dieser nachgeordnete Vorrichtung zum Umgang mit Artikeln aufweist, welche Vorrichtung eine Beladestation mit einem eine Beladeöffnung und eine vermittels zweier gegenläufiger Jalousien eines Jalousieverschlusses verschließbare Entladeöffnung aufweisenden Jalousiekopf, eine Übergabefläche, auf der ein oder mehrere Artikel bereitstehen oder bereitgestellt werden, um an den Jalousiekopf übergeben zu werden, sowie Mittel zur Übergabe bereitstehender Artikel von der Übergabefläche an den Jalousiekopf umfasst, bei welcher Vorrichtung die Übergabefläche durch eine Transferfläche einer zwischen der Gruppierstation und der Beladestation angeordneten Transferstation der Anlage gebildet ist.

Die dargestellten Ausführungsformen stellen lediglich Beispiele dar, wie eine Vorrichtung oder ein erfindungsgemäßes Verfahren ausgestaltet sein können und stellen keine abschließende Begrenzung dar.

Eine in den Figuren 1 und 2 ganz oder in Teilen dargestellte Vorrichtung 01 zum Umgang mit Artikeln 02 umfasst eine Beladestation 03 mit einem eine Beladeöffnung 31 und eine vermittels zweier gegenläufiger Jalousien 32 eines Jalousieverschlusses 33 verschließbare Entladeöffnung 34 aufweisenden Jalousiekopf 30.

Die Vorrichtung 01 umfasst darüber hinaus eine Übergabefläche 04, auf der ein oder mehrere, beispielsweise vorzugsweise vermittels einer Gruppierstation 05 zu Artikellagen 12 gruppierte Artikel 02 bereitstehen oder bereitgestellt werden, um an den Jalousiekopf 30 übergeben zu werden.

Außerdem umfasst die Vorrichtung 01 Mittel 07 zur Übergabe eines oder mehrerer bereitstehender, beispielsweise zu Artikellagen 12 gruppierter Artikel 02 von der Übergabefläche 04 an den Jalousiekopf 30 (Figur 5). Die Übergabe eines oder mehrerer bereitstehender, beispielsweise zu Artikellagen 12 gruppierter Artikel 02 von der Übergabefläche 04 an den Jalousiekopf 30 ist dabei in den Figuren 1 und in den Figuren 2 durch Pfeile 26 angedeutet.

Die Mittel 07 zur Übergabe einen oder mehrere Schieber und/oder eine vermittels einer Transport- und/oder Fördereinrichtung 70, wie etwa eines Rollen- oder Bandförderers verwirklichte und dadurch beweglich ausgeführte Übergabefläche umfassen (Figur 5).

Die Vorrichtung 01 umfasst darüber hinaus eine nicht näher dargestellte Steuereinrichtung, welche die in den Figuren 1 dargestellte Vorrichtung 01 entsprechend einem in Figur 1a bis Figur 1j dargestellten Ablauf eines Verfahrens und die in den Figuren 2 dargestellte Vorrichtung 01 entsprechend einem in Figur 2a bis Figur 2h dargestellten Ablauf eines Verfahrens steuert.

Den in Figur 1a bis Figur 1j und in Figur 2a bis Figur 2h dargestellten Verfahrensabläufen ist dabei gemein, dass die Steuereinrichtung die beispielsweise durch Überschieben verwirklichte, durch Pfeile 26 angedeutete Übergabe bzw. die Mittel 07 zur Übergabe und das durch Pfeile 23 angedeutete Schließen der Jalousien 32 unabhängig davon, ob sich die Jalousien 32 des Jalousieverschlusses 33 des Jalousiekopfs 30 in deren beispielsweise in Figur 1 e, Figur 1 j, Figur 2c und Figur 2g dargestellten Offenstellung, oder in deren beispielsweise in Figur 1 a, Figur 1 b, Figur 1 c, Figur 1 g, Figur 2a, Figur 2e, Figur 3, Figur 4, Figur 5 dargestellten Schließstellung befinden, derart steuert, dass mit der Übergabe begonnen wird, sobald:
- der Jalousiekopf 30 und die Übergabefläche 04 das selbe, in Figur 1 a, Figur 1 b, Figur 1f, Figur 2d, Figur 2h durch eine gestrichelte Linie dargestellte Übergabeniveau 20 einnehmen und
- sich die Beladeöffnung 31 des Jalousiekopfs 30 frei von einem durch die zu übergebenden, beispielsweise zu einer Artikellage 12 gruppierten Artikel 02 unüberwindbaren horizontalen Abstand unmittelbar vor der Übergabefläche 04 befindet und
- die Jalousien 32 beispielsweise frei von einer Kollision frühestmöglich geschlossen werden können, und
- die Steuereinrichtung spätestens gleichzeitig mit dem Beginn der Übergabe das durch Pfeile 23 angedeutete Schließen der Jalousien 32 startet.

Das Übergabeniveau 20 wird dabei durch ein Niveau gebildet, bei dem das durch die Oberfläche der Jalousien 32 in Schließstellung gebildete Niveau des Jalousiekopfs 30 mit dem durch die Oberfläche der Übergabefläche 04 gebildeten Niveau der Übergabefläche 04 übereinstimmt.

Damit der Jalousiekopf 30 und die Übergabefläche 04 das selbe Übergabeniveau einnehmen, muss demnach das durch die Oberfläche der Jalousien 32 in Schließstellung gebildete Niveau des Jalousiekopfs 30 mit dem durch die Oberfläche der Übergabefläche 04 gebildeten Niveau der Übergabefläche 04 übereinstimmen.

Wie aus den in den Figuren 1 a bis 1j und 2a bis 2h dargestellten Verfahrensabläufen ersichtlich ist, steuert die Steuervorrichtung demnach den Beginn des durch die Pfeile 23 angedeuteten Schließens der Jalousien 32 des Jalousiekopfs 30 und den Beginn des durch die Pfeile 26 angedeuteten Überschiebens beispielsweise einer bereitstehenden Artikellage 12 aus mehreren, gruppierten Artikeln 02 in den Jalousiekopf 30 derart, dass beispielsweise bereits mit dem Beginn des Schließens der Jalousien 32 oder noch während deren Schließens oder nach deren Schließens die beispielsweise durch Überschieben verwirklichte Übergabe gestartet wird, sobald sich der Jalousiekopf 30 und die auf der Oberfläche der Übergabefläche 04 bereitstehende Artikellage 12 auf dem selben Niveau befinden und die Beladeöffnung 31 vor der Übergabefläche 04 liegt.

Unter den zuvor genannten Bedingungen startet die Übergabe jedoch vorzugsweise erst dann, wenn mit dem Schließen der Jalousie frühestmöglich begonnen werden kann. Dieser Aspekt kann beispielsweise wichtig sein, wenn die Jalousien 32 noch nicht geschlossen werden können, beispielsweise weil es ansonsten zu einer Kollision beispielsweise mit gerade an einem Stapelplatz 10 als neu begonnener Stapel 11 als oberste und bis dato einzige Stapellage 13 abgelegten Artikeln 02 oder mit als oberste Stapellage 13 auf einen durch bereits zuvor am Stapelplatz 10 abgelegte Artikel 02 gebildete Stapellagen 14 bereits begonnenen Stapel 11 aufgelegten Artikeln 02 kommen könnte.

Wichtig ist hervorzuheben, dass wie aus der einleitenden Definition eines Jalousiekopfs 30 hervorgeht, die durch Pfeile 26 angedeutete Bewegungsrichtung der Artikel 02 bzw. Artikellagen 12 bei der Übergabe bzw. während des Überschiebens von der Übergabefläche 04 zum Jalousiekopf 30 mit der durch gleichgerichtete Pfeile 23 angedeuteten Bewegungsrichtung einer der beiden Jalousien 32 des Jalousieverschlusses 33 des Jalousiekopfs 30 von deren Offenstellung in deren Schließstellung übereinstimmt und der durch entgegengerichtete Pfeile 23 angedeuteten Bewegungsrichtung der anderen Jalousie 32 von deren Offenstellung in deren Schließstellung genau entgegengesetzt ist. Damit kann mit dem Überschieben bzw. mit der Übergabe bereits begonnen werden, bevor die Jalousien 32 geschlossen sind.

Wie in den Figuren 1 und 2 dargestellt kann bei einer Vorrichtung 01 vorgesehen sein, dass der Jalousiekopf 30 bei einem von der Beladestation 03 vorgesehenen Umgang mit Artikeln, der das Aufstapeln von Stapellagen 13, 14 bildenden, von der Übergabefläche 04 übernommenen, beispielsweise zu Artikellagen 12 gruppierten Artikeln 02 an einem Stapelplatz 10 zu einem Stapel 11 vorsieht, zwischen zwei aufeinanderfolgenden Übergaben von auf der Übergabefläche 04 bereitgestellter Artikel 02 bzw. Artikellagen 12 lediglich Vertikalbewegungen ausführt, wie in Figur 1c, Figur 1 e, Figur 1g, Figur 1 j, Figur 2a, Figur 2c, Figur 2e und Figur 2g durch Pfeile 21, 22 angedeutet. Pfeile 21 stellen dabei vertikale Abwärtsbewegungen und Pfeile 22 vertikale Aufwärtsbewegungen des Jalousiekopfs 30 dar.

Demnach führt der Jalousiekopf 30 beim Beladen vermittels der Beladestation 03, bei dem an einem Stapelplatz 10 Artikellage 12 um Artikellage 12 als Stapellagen 13, 14 zu einem Stapel 11 aufgestapelt werden, vorzugsweise nur Vertikalbewegungen aus.

Wie in den Figuren 1 und 2 dargestellt kann bei einer Vorrichtung 01 vorgesehen sein, zumindest diejenige Jalousie 32 des Jalousieverschlusses 33, die bei der Bewegung der beiden gegenläufigen Jalousien 32 des Jalousieverschlusses 33 von deren Schließstellung in deren Offenstellung zu derjenigen Stirnseite 35 (Figur 4) des Jalousiekopfs 30 hin weggezogen wird, an der sich die Beladeöffnung 31 des Jalousiekopfs 30 befindet, durch welche Beladeöffnung 31 hindurch mindestens ein auf der Übergabefläche 04 bereitstehender Artikel 02 bei der Übergabe in den Aufnahmeraum 36 (Figur 4) des Jalousiekopfs 30 eingebracht wird, bei der Bewegung von der Schließstellung in die Offenstellung vorzugsweise nach unten hin, unter das durch die Oberfläche der Jalousien 32 in Schließstellung gebildete Niveau des Jalousiekopfs 30 umgelenkt oder nach unten hin aufgewickelt oder nach unten hin aufgerollt wird, um eine einwandfreie Zugänglichkeit der Beladeöffnung 31 während der Übergabe sicherzustellen, befinden sich die Jalousien 32 noch nicht in deren Schließstellung.

Das Absetzen von beispielsweise zu einer Artikellage 12 gruppierten Artikeln 02 am Stapelplatz 10 erfolgt dabei vermittels des Jalousiekopfs 30 der Beladestation derart, dass der Jalousiekopf 30 sich mit der Unterseite seiner sich in deren Schließstellung befindenden Jalousien 32 bis dicht über die Oberfläche der zuletzt am Stapelplatz 10 aufgelegten Stapellage 13, oder wenn gerade ein Stapel 11 vervollständigt und abtransportiert wurde, bis zur beispielsweise durch die Oberseite einer Palette gebildeten Oberfläche des Stapelplatzes 10 absenkt, und seine in Figur 1e, Figur 1j, Figur 2c und Figur 2g jeweils durch eine gestrichelte Linie angedeutete, zwischen den einander zugewandten Vorderkanten der Jalousien 32 des Jalousiekopfs 30 in deren Offenstellung befindlichen Entladeöffnung 34 durch in Figur 1 d, Figur 1 h, Figur 2b und Figur 2f durch Pfeile 29 angedeutetes Zurückziehen der bis dato die sich im Aufnahmeraum 36 befindenden, beispielsweise zu einer Artikellage 12 gruppierten Artikel 02 tragenden Jalousien 32 frei gibt. Dabei können Abstreifmittel 08 vorgesehen sein, welche die von den Jalousien 32 getragenen Artikel 02 während des durch Pfeile 29 in den Figuren 1 und 2 angedeuteten Öffnens der Jalousien 32 daran hindern, jeweils der Bewegung der beiden gegenläufigen Jalousien 32 zu folgen. Die Artikel 02 werden dadurch als zeitweilig oberste Stapellage 13 eines am Stapelplatz 10 aufzustapelnden Stapels 11 aufgelegt, welche zu einer Stapellage 14 im Stapel 11 wird, sobald weitere beispielsweise zu einer Artikellage 12 gruppierte Artikel 02 vermittels des Jalousiekopfs 30 als neue, oberste Stapellage 13 aufgelegt werden.

Die Übergabefläche 04 kann beispielsweise wie bei der in den Figuren 1 dargestellten Vorrichtung 01 durch eine Bereitstellungsfläche 50 einer Gruppierstation 05 gebildet sein, eine solche umfassen oder von einer solchen umfasst werden.

Dabei kann die Gruppierstation 05 wie in Figur 1c, Figur 1d, Figur 1g und Figur 1h durch Pfeile 28 angedeutet direkt nach der durch Pfeile 26 in den Figuren 1 angedeuteten Übergabe einer Artikellage 12 von der die Übergabefläche 04 bildenden Bereitstellungsfläche 50 der Gruppierstation 05 an den Jalousiekopf 30 der Beladestation 03, oder noch während die durch Pfeile 26 in den Figuren 1 angedeutete Übergabe einer Artikellage 12 von der die Übergabefläche 04 bildenden Bereitstellungsfläche 50 der Gruppierstation 05 an den Jalousiekopf 30 der Beladestation 03 stattfindet damit beginnen, am frei gewordenen Platz eine neue Artikellage 12 aus einem ein- oder mehrbahnig zulaufenden Artikelstrom zu gruppieren und/oder bereitzustellen.

Die Übergabefläche 04 kann alternativ beispielsweise wie bei der in den Figuren 2 dargestellten Vorrichtung 01 durch eine Transferfläche 60 einer Transferstation 06 gebildet sein, eine solche umfassen oder von einer solchen umfasst werden. Die Transferstation 06 ist beispielsweise zwischen einer im Artikelzulauf vorgelagerten Gruppierstation 05 und der Beladestation 03 vorgesehen bzw. angeordnet. Die Transferfläche 60 überbrückt bereits während des durch die Pfeile 21, 22 angedeuteten Verfahrens des Jalousiekopfs 30 der Beladestation 03 eine vertikale Höhendifferenz zwischen dem Niveau einer Bereitstellungsfläche 50 der Gruppierstation 05 und einem beispielsweise in seiner Höhe variablen Übergabeniveau 20, auf dem die durch Pfeile 26 angedeutete Übergabe der auf die die Übergabefläche 04 bildenden Transferfläche 60 verbrachten, beispielsweise zu Artikellagen 12 gruppierten Artikel 02 von der Transferstation 06 an die Beladestation 03 stattfindet, oder sie beginnt eine solche vertikale Höhendifferenz zu überbrücken, noch während die Beladestation 03 mit dem Aufsetzen beispielsweise einer Artikellage 12 als oberste Stapellage 13 auf einen Stapel 11 oder mit der Rückführung des Jalousiekopfs 30 vom letzten Aufsetzen einer Artikellage 12 als oberste Stapellage 13 auf den Stapel 11 zum Übergabeniveau 20 beschäftigt ist.

Das Übergabeniveau 20 kann beispielsweise auf dem Niveau der Oberfläche einer obersten Stapellage 13 von an einem Stapelplatz 10 bis dato zu einem Stapel 11 aufgestapelten Artikellagen 12 liegen. Zur Überbrückung des Niveauunterschieds vermittels der Transferstation 06 werden die beispielsweise zu Artikellagen 12 gruppierten Artikel 02 beispielsweise von der Bereitstellungsfläche 50 einer Gruppierstation 05 auf die die Übergabefläche 04 bildende Transferfläche 60 der Transferstation 06 verbracht, beispielsweise übergeschoben, oder im Falle einer beispielsweise vermittels Transport- und/oder Fördereinrichtungen 70, wie etwa Rollen- oder Bandförderern, verwirklichten beweglichen Ausführung der Bereitstellungsfläche 50 und/oder der Transferfläche 60 durch Antrieb der Transport- und/oder Fördereinrichtungen 70 transportiert. Anschließend verbringt die Transferstation 06 die Transferfläche 60 mit den darauf befindlichen, beispielsweise zu einer Artikellage 12 gruppierten Artikeln 02 auf das vorzugsweise variable Übergabeniveau 20, auf dem die durch Pfeile 26 angedeutete Übergabe der auf die Transferfläche 60 verbrachten, beispielsweise zu Artikellagen 12 gruppierten Artikel 02 von der Transferstation 06 an die Beladestation 03 stattfindet, beispielsweise auf das Niveau der Oberfläche der obersten Stapellage 13 von an einem Stapelplatz 10 bis dato zu einem Stapel 11 aufgestapelten Artikellagen 12 oder auf das nächsthöhere Niveau, falls der Jalousiekopf 30 gerade mit einer Artikellage 12 beladen und noch nicht damit fertig oder gerade noch dabei ist, diese als weitere Stapellage 13 auf einen Stapel 11 aufzulegen, oder auf ein Startniveau, wird eine solche noch abzulegende Artikellage 12 die letzte, oberste Stapellage 13 eines Stapels 11 sein, der daraufhin abtransportiert wird, um den Stapelplatz 10 für einen neuen Stapel 11 freizugeben. Ist gerade ein Stapel 11 abtransportiert, kann dies Startniveau das beispielsweise durch die Oberfläche einer Stapelfläche 10, beispielsweise die Oberfläche einer Palette, vorgegebene Niveau sein. Der Jalousiekopf 30, dessen durch die Oberfläche der Jalousien 32 des Jalousieverschlusses 33 in dessen Schließstellung gebildetes Niveau sich zunächst auf dem Niveau der Unterseite der zuletzt am Stapelplatz 10 zuoberst abgelegten und damit die oberste Stapellage 13 auf dem Stapel 11 bildenden Artikellage 12 befindet, kann derweil auf das Übergabenniveau 20 verfahren, das beispielsweise das zur Ablage der nächsten Artikellage 12 am Stapelplatz 10 nunmehr anstehende, durch das Niveau der Oberseite der obersten Stapellage 13 gebildete Niveau sein kann.

Das Übergabeniveau 20 kann demnach, beispielsweise wie beschrieben, variabel sein.

Wie in den Figuren 2 dargestellt kann bei einer Vorrichtung 01, bei der die Übergabefläche 04 durch eine Transferfläche 60 einer Transferstation 06 gebildet ist, vorgesehen sein, dass eine die Übergabefläche 04 bildende Transferfläche 60 einer Transferstation 06 zwischen zwei aufeinanderfolgenden, durch Pfeile 26 angedeuteten Übergaben von auf der Übergabefläche 04 bereitgestellter Artikel 02 bzw. Artikellagen 12 an den Jalousiekopf 30 der Beladestation 03 wie in Figur 2c, Figur 2e und Figur 2g durch Pfeile 24, 25 angedeutet lediglich Vertikalbewegungen ausführt. Pfeile 24 stellen dabei vertikale Abwärtsbewegungen und der Pfeil 25 in Figur 2e eine vertikale Aufwärtsbewegung der Transferfläche 60 der Transferstation 06 dar.

Ein nicht unerheblicher, zusätzlicher und mit einer möglichen, höheren Taktung einhergehender Zeitgewinn lässt sich bei der in den Figuren 2 dargestellten Vorrichtung 01 durch die zwischengeschaltete Transferstation 06 dadurch erreichen, dass, wie in Figur 2a und Figur 2e durch Pfeile 27 angedeutet, beispielsweise auf einer Bereitstellungsfläche 50 einer Gruppierstation 05 bereitstehende, beispielsweise zu einer Artikellage 12 gruppierte Artikel 02 bereits von der Bereitstellungsfläche 50 an die Transferfläche 60 übergeben werden können, noch bevor der Jalousiekopf 30 der Beladestation 03 mit dem Absetzen der letzten Artikellage 12 am Stapelplatz 10 fertig ist. Dadurch ist die Bereitstellungsfläche 50 schneller wieder frei, wodurch bereits früher auf der Bereitstellungsfläche 50 Platz für eine neu zu gruppierende Artikellage 12 geschaffen wird und dadurch die Gruppierstation 05 in der Lage ist, mit mehr Artikeln 02 umzugehen, entsprechend einer höheren Taktung.

Dabei kann die Gruppierstation 05 wie in Figur 2a und Figur 2e durch Pfeile 28 angedeutet noch während die durch Pfeile 27 in den Figuren 2 angedeutete Übergabe einer Artikellage 12 von der Bereitstellungsfläche 50 der Gruppierstation 05 an die die Übergabefläche 04 bildende Transferfläche 60 der Transferstation 06 stattfindet, oder direkt nach der durch Pfeile 27 in den Figuren 1 angedeuteten Übergabe einer Artikellage 12 von der Bereitstellungsfläche 50 der Gruppierstation 05 an die die Übergabefläche 04 bildende Transferfläche 60 der Transferstation 06 damit beginnen, am frei gewordenen Platz eine neue Artikellage 12 aus einem ein- oder mehrbahnig zulaufenden Artikelstrom zu gruppieren und/oder bereitzustellen.

Ein beispielsweise von einer zuvor beschriebenen Vorrichtung 01 ausgeführtes oder ausführbares, in einem Ablauf zumindest einiger seiner Verfahrensschritte in den Figuren 1 und 2 dargestelltes Verfahren zum Umgang mit Artikeln 02 vermittels einer einen Jalousiekopf 30 mit einer Beladeöffnung 31 und mit einer vermittels zweier gegenläufiger Jalousien 32 eines Jalousieverschlusses 33 verschließbaren Entladeöffnung 34 umfassenden Beladestation 03 sowie einer Übergabefläche 04 mit zumindest zeitweilig darauf bereitstehenden, beispielsweise zu Artikellagen 12 gruppierten und zur Übergabe an den Jalousiekopf 30 vorgesehenen Artikeln 02 sowie Mitteln 07 zur Übergabe eines oder mehrerer bereitstehender, beispielsweise zu Artikellagen 12 gruppierter Artikel 02 von der Übergabefläche 04 an den Jalousiekopf 30 sieht dabei vor, dass von der Übergabefläche 04 aus auf ihr bereitstehende, beispielsweise zu Artikellagen 12 gruppierte Artikel 02 an den Jalousiekopf 30 übergeben werden und diese Artikel 02 dann vermittels des Jalousiekopfs 30 jeweils als eine oberste Stapellage 13 an einem Stapelplatz 10 zu einem Stapel 11 aufgestapelt werden.

Ein solches Verfahren umfasst die Verfahrensschritte:
- Bereitstellung mindestens eines beispielsweise zu einer Artikellage 12 gruppiert als eine zunächst oberste Stapellage 13 in einen aufzustapelnden Stapel 11 einzubringenden Artikels 02 auf der Übergabefläche 04, beispielsweise wie durch Pfeile 28 in den Figuren 1 angedeutet, oder wie durch Pfeile 27 in den Figuren 2 angedeutet.
- Übergabe des mindestens einen auf der Übergabefläche 04 bereitstehenden Artikels 02 an den Jalousiekopf 30 beispielsweise durch in den Figuren 1 und 2 durch Pfeile 26 angedeutetes Überschieben durch die seitliche Beladeöffnung 31 des Jalousiekopfs hindurch in den Aufnahmeraum 36 des Jalousiekopfs 30, sobald:
   - der Jalousiekopf 30 und die Übergabefläche 04 das selbe Übergabeniveau 20 einnehmen und
   - sich die Beladeöffnung 31 des Jalousiekopfs 30 frei von einem durch die zu übergebenden Artikel 02 unüberwindbaren horizontalen Abstand unmittelbar vor der Übergabefläche 04 befindet und
   - die Jalousien 32 beispielsweise frei von einer Kollision frühestmöglich geschlossen werden können.
- Schließen der Jalousien 32 wie in den Figuren 1 und 2 durch Pfeile 23 angedeutet spätestens gleichzeitig mit dem Beginn der durch die Pfeile 26 in den Figuren 1 und 2 angedeuteten Übergabe.

Das Verfahren zeichnet sich demnach dadurch aus, dass bereits mit dem Beginn des Schließens der Jalousien 32 das Überschieben gestartet wird, sobald sich Jalousiekopf 30 und beispielsweise die bereitstehende Artikellage 12 auf dem selben Übergabeniveau 20 befinden und mit dem Schließen der Jalousien 32 frühestmöglich begonnen werden kann, beispielsweise wenn eine Kollisionsbereich verlassen ist.

Dabei kann wie in Figur 1 c, Figur 1 d, Figur 1g, Figur 1 h, Figur 2a und Figur 2e durch Pfeile 27 angedeutet spätestens sobald eine in den Figuren 1 und 2 durch Pfeile 26 angedeutete Übergabe eines oder mehrerer, beispielsweise zu einer Artikellage 12 gruppierter Artikel 02 von der Übergabefläche 04 an den Jalousiekopf 30 abgeschlossen ist, erneut ein oder mehrere, beispielsweise zu einer Artikellage 12 gruppierte Artikel 02 auf der Übergabefläche 04 bereitgestellt werden.

Dabei kann vorgesehen sein, sobald die Übergabefläche frei von einem oder mehreren zuvor auf der Übergabefläche bereitgestellten Artikeln ist, sofort einen oder mehrere Artikel erneut auf ihr bereitzustellen, oder dass die erneute Bereitstellung zeitgleich oder zumindest unter zeitlicher Überschneidung mit der Übergabe einer Artikellage von der Übergabefläche an den Jalousiekopf erfolgt.

Wie bereits zur Vorrichtung 01 beschrieben kann das Verfahren vorsehen, dass:
- der Jalousiekopf 30 zum Aufstapeln von Stapellagen 13, 14 an einem Stapelplatz 10 zu einem Stapel 11 zwischen zwei aufeinanderfolgenden, durch Pfeile 26 in den Figuren 1 und 2 angedeuteten Übergaben von auf der Übergabefläche 04 bereitgestellter Artikel 02 lediglich Vertikalbewegungen ausführt, und/oder
- zumindest diejenige Jalousie 32, die bei ihrer Bewegung aus deren Schließstellung zu deren Offenstellung zu derjenigen Stirnseite 35 hin weggezogen wird, an welcher sich die Beladeöffnung 31 befindet, nach unten hin, unter das durch die Oberfläche der Jalousien 32 in Schließstellung gebildete Niveau des Jalousiekopfs 30 umzulenken oder nach unten hin aufzuwickeln oder nach unten hin aufzurollen, um eine uneingeschränkte Zugänglichkeit der Beladeöffnung 31 des Jalousiekopfs 30 bereits sicherzustellen, wenn sich die Jalousien 32 des Jalousieverschlusses 33 noch nicht oder noch nicht vollständig in deren Schließstellung befinden, und/oder
- das Übergabeniveau 20 in dessen vertikaler Höhe variabel ist, und/oder
- die Übergabefläche 04 selbst vertikal, beispielsweise dem Jalousiekopf 30 entgegen bewegt wird, um auf ihr bereitgestellte Artikel 02 schneller an den Jalousiekopf 30 übergeben zu können, und die Übergabefläche 04 dem Jalousiekopf 30 zu einem beispielsweise variablen Übergabeniveau 20 hin entgegenfährt.
Ein solches beispielsweise variables Übergabeniveau 20 kann sich wie bereits zuvor sowohl zur dort erwähnten Vorrichtung 01, als auch zum bereits erwähnten Verfahren oder Teilen hiervon beschrieben ergeben bzw. hierdurch gebildet sein.

Hiernach sieht das Verfahren eine Kombination einer Beladestation 03 mit einer Transferstation 06 vor bzw. kann durch eine solche Kombination verwirklicht sein, wobei die Übergabe von Artikeln 02 zwischen der Transferstation 06 und der Beladestation 03 bereits mit dem Beginn des Schließens der Jalousien 32 des Jalousiekopfs 30 der Beladestation 03 erfolgen kann, sobald sich eine die Übergabefläche 04 bildende Transferfläche 60 der Transferstation 06 und der Jalousiekopf 30 der Beladestation 03 auf dem selben Niveau befinden und sich die Beladeöffnung 31 des Jalousiekopfs 30 unmittelbar vor der Transferfläche 60 befindet.

Beispielsweise in Verbindung mit einem variablen Übergabeniveau 20 ist eine niveaudifferenzfreie, synchrone, gleichgerichtete Vertikalbewegung der beispielsweise durch eine Transferfläche 60 einer Transferstation 06 gebildeten Übergabefläche 04 und des Jalousiekopfs 30 während des Überschiebens bzw. während der Übergabe eines oder mehrerer beispielsweise zu einer Artikellage 12 gruppierten Artikel 02 beispielsweise von einer Transferstation 06 an die Beladestation 03 denkbar.

Ein in Figur 3, Figur 4 und Figur 5 ganz oder in Teilen dargestellter Jalousiekopf 30 einer Beladestation 03 zum Umgang mit Artikeln 02 durch deren Aufstapeln zu einem aus mehreren Stapellagen 13, 14 bestehenden Stapel 11 an einem Stapelplatz 10 umfasst einen von einer Oberseite 37, einer Unterseite 38 sowie die Oberseite 37 und die Unterseite 38 miteinander verbindenden, gegenüberliegenden Schmalseiten 39 und Stirnseiten 35 umgebenen Aufnahmeraum 36 für einen oder mehrere, beispielsweise zu einer Artikellage 12 gruppierte Artikel 02. Die Unterseite 38 des Jalousiekopfs 30 weist eine vermittels zweier gegenläufiger Jalousien 32 eines Jalousieverschlusses 33 verschließbare Entladeöffnung 34 auf. Darüber hinaus umfasst der Jalousiekopf 30 wenigstens eine an zumindest einer der Stirnseiten 35 angeordnete Beladeöffnung 31. An den beiden Schmalseiten 39 sind beidseits der Entladeöffnung 34 des Jalousiekopfs 30 Führungseinrichtungen 40 des Jalousieverschlusses 33 einander gegenüberliegend angeordnet. In einer Schließstellung der Jalousien 32, bei der die Entladeöffnung 34 an der Unterseite 38 geschlossen ist, werden ein oder mehrere in den Aufnahmeraum 36 eingebrachte Artikel 02 während des Umgangs mit diesen von den Jalousien 32 getragen. Durch ein Wegziehen der Jalousien 32 in entgegengesetzten, horizontalen Richtungen unter dem mindestens einen in den Aufnahmeraum 36 eingebrachten Artikel 02 wird der Jalousiekopf 30 entladen. Beispielsweise eine vorzugsweise entweder wie in Figur 3, Figur 4 und Figur 5 dargestellt an der Oberseite 37, oder an der oder an wenigstens einer der beiden Schmalseiten 39 angeordnete Kupplungsvorrichtung 41 dient der vorzugsweise lösbaren Verbindung mit einer Verbringungsvorrichtung 42, beispielsweise mindestens einem an einem horizontalen Querträger verfahrbaren Schlitten oder einem Hubwerk oder einem mehrachsig beweglicher Roboterarm, um nur einige denkbare Ausgestaltungen zu nennen. Grundsätzlich sind auch andere Verbindungen zwischen Jalousiekopf 30 und Verbringungsvorrichtung 42 denkbar.

Figur 3 zeigt dabei eine gleichzeitige Zuführung von unter dem oder den im Aufnahmeraum 36 transportierten Artikeln 02 beispielsweise beim Aufstapeln auf einen Stapel 11 an einem Stapelplatz 10 zu platzierende Zwischenlagen 43, die vermittels einer gesonderten Transporteinrichtung 44 unter den Jalousiekopf 30 zugeführt werden können. An der Unterseite 38 des Jalousiekopfs 30 und/oder an der Unterseite einer oder beider Jalousien 32 können beispielsweise Sauggreifer angeordnet sein, welche eine Zwischenlage 43 ansaugen können, so dass diese dann vom Jalousiekopf 30 mit zum Stapelplatz 10 transportiert und gleichzeitig mit oder vor dem Entladen des Jalousiekopfs 30 unter dem oder den im Aufnahmeraum 36 transportierten Artikeln 02 unter diesen auf den Stapel 11 aufgelegt wird.

Eine mit einem solchen, in Figur 3 dargestellten Jalousiekopf 30 ausgestattete Vorrichtung 01 kann demnach einen beispielsweise wie beschrieben ausgeführten Zwischenlagengreifer umfassen, der mit jeder Bewegung der Jalousien 32 aus deren Offen- in deren Schließstellung eine Zwischenlage 43 beispielsweise von einem Zwischenlagenstapel oder einer eigens hierfür vorgesehenen Transporteinrichtung 44 übernimmt, die dann auf die bis dato zuoberste Stapellage 13 unter eine neue, zuoberst auf einen Stapel 11 aufzulegende Artikellage 12 abgelegt wird.

Figur 4 zeigt dabei einen Jalousiekopf 30 dessen Entladeöffnung 34 an der Unterseite 38 momentan von den zwei gegenläufigen Jalousien 32 des Jalousieverschlusses 33 geschlossen ist. Der Jalousiekopf 30 ist dadurch bereit, durch die an einer seiner Stirnseiten 35 vorgesehene Beladeöffnung 31 in seinen Aufnahmeraum 36 eingebrachte Artikel 02 zu tragen.

Figur 5 zeigt, wie ein Jalousiekopf 30, dessen Entladeöffnung 34 an der Unterseite 38 momentan von den zwei gegenläufigen Jalousien 32 des Jalousieverschlusses 33 geschlossen ist oder gerade geschlossen wird, durch die an einer seiner Stirnseiten 35 vorgesehene Beladeöffnung 31 beladen wird. Dabei werden Artikel 02, die zuvor von einer Gruppierstation 05 zu einer Artikellage 12 gruppiert und auf deren Bereitstellungsfläche 50 bereitgestellt sowie auf eine vertikal höhenbewegliche Transferfläche 60 einer Transferstation 06 übergeschoben wurden, von der eine Übergabefläche 04 bildenden Transferfläche 60 gerade durch die Beladeöffnung 31 eines vertikal höhenbeweglichen Jalousiekopfs 30 einer Beladestation 03 hindurch auf die Jalousien 32 in den Aufnahmeraum 36 geschoben. Die Jalousien 32 tragen dabei die Artikel 02 bis zum Entladen des Jalousiekopfs 30, bei dem die beiden Jalousien 32 dann in entgegengesetzten horizontalen Richtungen unter den im Aufnahmeraum 36 befindlichen Artikeln 02 weggezogen werden.

Figur 5 zeigt hierbei eine Situation, bei der das Übergabeniveau 20 zwischen der die Übergabefläche 04 bildenden Transferfläche 60 der Transferstation 06 und der Oberfläche der Jalousien 32 des Jalousiekopfs 30 der Beladestation 03 in deren geschlossenem Zustand mit dem Niveau der Bereitstellungsfläche 50 der Gruppierstation 05 übereinstimmt. Eine solche Situation kann beispielsweise bei der dargestellten, durch eine Vorrichtung 01 mit einer Beladestation 03 und einer durch eine Transferfläche 60 einer im Sinne des Artikelstroms der Beladestation 03 vorgelagerten Transferstation 06, der Transferstation 06 und einer dieser wiederum im Sinne des Artikelstroms vorgelagerten Gruppierstation 05 gebildeten Anlage 100 vorkommen, wenn gerade ein Stapel 11 am unter dem Jalousiekopf 30 befindlichen Stapelplatz 10 abtransportiert wurde und ein neuer Stapel 11 aufgestapelt wird oder mit dem Aufstapeln eines neuen Stapels 11 am Stapelplatz 10 begonnen wird.

Wichtig ist hervorzuheben, dass eine solche Anlage 100 auch eine Steigerung der Taktung im Vergleich zum Stand der Technik zulässt, wenn die Übergabe erst stattfindet, wenn die Jalousien 32 des Jalousiekopfs beispielsweise vollständig geschlossen sind.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

Die Erfindung ist beispielsweise bei der Herstellung und dem Betrieb von Anlagen zum Umgang mit Artikeln gewerblich anwendbar.

### Bezugszeichenliste

- 01: Vorrichtung
- 02: Artikel
- 03: Beladestation
- 04: Übergabefläche
- 05: Gruppierstation
- 06: Transferstation
- 07: Mittel zur Übergabe
- 08: Abstreifmittel
- 10: Stapelplatz
- 11: Stapel
- 12: Artikellage
- 13: oberste Stapellage
- 14: Stapellage
- 20: Übergabeniveau
- 21: Pfeil (vertikale Abwärtsbewegung des Jalousiekopfs 30)
- 22: Pfeil (vertikale Aufwärtsbewegung des Jalousiekopfs 30)
- 23: Pfeil (Schließen der Jalousien 32)
- 24: Pfeil (vertikale Abwärtsbewegung der Transferfläche 60)
- 25: Pfeil (vertikale Abwärtsbewegung der Transferfläche 60)
- 26: Pfeil (Übergabe von der Übergabefläche 04 an den Jalousiekopf 30)
- 27: Pfeil (Übergabe von der Übergabefläche 04 an den Jalousiekopf 30)
- 28: Pfeil (Bereitstellung von Artikeln 02)
- 29: Pfeil (Öffnen der Jalousien 32)
- 30: Jalousiekopf
- 31: Beladeöffnung
- 32: Jalousie
- 33: Jalousieverschluss
- 34: Entladeöffnung
- 35: Stirnseite
- 36: Aufnahmeraum
- 37: Oberseite
- 38: Unterseite
- 39: Schmalseite
- 40: Führungseinrichtung
- 41: Kupplungsvorrichtung
- 42: Verbringungsvorrichtung
- 43: Zwischenlage
- 44: Transporteinrichtung
- 50: Bereitstellungsfläche
- 60: Transferfläche
- 70: Transport- und/oder Fördereinrichtung
- 100: Anlage

## Patentansprüche

1. Verfahren zum Umgang mit Artikeln (02, 12) vermittels einer einen Jalousiekopf (30) mit einer Beladeöffnung (31) und mit einer vermittels zweier gegenläufiger Jalousien (32) eines Jalousieverschlusses (33) verschließbaren Entladeöffnung (34) umfassenden Beladestation (03) sowie einer Übergabefläche (04) mit zumindest zeitweilig darauf bereitstehenden und zur Übergabe (26) an den Jalousiekopf (30) vorgesehenen Artikeln (02, 12), bei welchem Verfahren von der Übergabefläche (04) aus auf ihr bereitstehende Artikel (02, 12) an den Jalousiekopf (30) übergeben werden und diese Artikel (02, 12) dann vermittels des Jalousiekopfs (30) jeweils als eine Stapellage (13, 14) an einem Stapelplatz (10) zu einem Stapel, (11) aufgestapelt werden, umfassend die Verfahrensschritte:
- Bereitstellung (27, 28) mindestens eines als eine Stapellage (13, 14) in einen aufzustapelnden Stapel (11) einzubringenden Artikels (02, 12) auf der Übergabefläche (04),
- Übergabe (26) des mindestens einen auf der Übergabefläche (04) bereitstehenden Artikels (02, 12) an den Jalousiekopf (30) durch dessen seitliche Beladeöffnung (31) hindurch sobald:
- der Jalousiekopf (30) und die Übergabefläche (04) das selbe Übergabeniveau (20) einnehmen und
- sich die Beladeöffnung (31) des Jalousiekopfs (30) unmittelbar vor der Übergabefläche (04) befindet und
- die Jalousien (32) frühestmöglich geschlossen werden können,
und
- Schließen (23) der Jalousien (32) spätestens gleichzeitig mit dem Beginn der Übergabe (26), **dadurch gekennzeichnet, dass**
die Übergabefläche (04, 60) selbst vertikal bewegt und dem Jalousiekopf (30) zu einem Übergabeniveau (20) hin entgegengefahren wird, und dass eine niveaudifferenzfreie, synchrone, gleichgerichtete Vertikalbewegung (24, 21, 25, 22) der Übergabefläche (04, 60) und des Jalousiekopfs (30) während des Überschiebens (26) bzw. während der Übergabe eines oder mehrerer Artikel (02, 12) erfolgt.

2. Verfahren nach Anspruch 1, wobei spätestens sobald eine Übergabe (26) eines oder mehrerer Artikel (02, 12) von der Übergabefläche (04) an den Jalousiekopf (30) abgeschlossen ist, erneut ein oder mehrere Artikel (02, 12) auf der Übergabefläche (04) bereitgestellt (27, 28) werden.

3. Verfahren nach Anspruch 1 oder 2, wobei der Jalousiekopf zum Aufstapeln von Stapellagen (13, 14) an einem Stapelplatz (10) zu einem Stapel (10) zwischen zwei aufeinanderfolgenden Übergaben (26) von auf der Übergabefläche (04) bereitgestellter Artikel (02, 12) lediglich Vertikalbewegungen (21, 22) ausführt.

4. Verfahren nach Anspruch 1, 2 oder 3, **gekennzeichnet durch** ein variables Übergabeniveau (20).

## Claims

1. Method for dealing with articles (02, 12) by means of a loading station (03), the loading station (03) comprising a shutter head (30) with a loading opening (31) and with a discharge opening (34) closable by means of two opposing louvres (32) of a louvre shutter (33), furthermore comprising a transfer surface (04) on which articles (02, 12) are provided at least temporarily for transferring to the shutter head (30), in which method articles (02, 12) standing on the transfer surface (04) are transferred to the shutter head (30) and whereby these articles (02, 12) form an article layer (13, 14) that is stacked by means of the shutter head (30) at a stacking site (10) to form a stack (11), the method comprising the following steps:
- providing (27, 28) at least one article (02, 12) to be introduced into the stack (11) in form of at least one article layer (13, 14) on the transfer surface (04),
- handing over (26) of the at least one article (02, 12) standing on the transfer surface (04) to the shutter head (30) through the lateral loading opening (31) as soon as:
- the shutter head (30) and the transfer surface (04) are arranged on the same transfer level (20) and
- the loading opening (31) of the shutter head (30) is located immediately in front of the transfer surface (04) and
- the louvres (32) can be closed as soon as possible, and
- closing (23) of the louvres (32) at the latest simultaneously with the start of the transfer (26), **characterized in that**
- the transfer surface (04, 60) itself moves vertically and moves towards a transfer level (20) to the shutter head (30), and that a level difference- free, synchronous rectified vertical movement (24, 21, 25, 22) of the transfer surface (04, 60) and the shutter head (30) takes place during the thrusting (26) or the transfer of one or more articles (02, 12).

2. Method according to claim 1, wherein at the latest as soon as a handing over (26) of one or more articles (02, 12) from the transfer surface (04) to the shutter head (30) has been completed, one or more articles (02, 12) are provided (27, 28) again on the transfer surface (04).

3. Method according to claim 1 or 2, wherein the shutter head for the stacking of article layers (13, 14) on a stacking site (10) to form a stack (10) only executes vertical movements (21, 22) between two successive handing overs (26) of articles (02 , 12) provided on the transfer surface (04).

4. The according to claim 1, 2 or 3, **characterized by** a variable transfer level (20).

## Revendications

1. Procédé de manutention d'articles (02, 12) au moyen d'une station de chargement (03) comprenant une tête de jalousie (30) dotée d'une ouverture de chargement (31) et d'une ouverture de déchargement (34) refermable au moyen de deux jalousies (32) opposées d'une fermeture de jalousie (33), ainsi que d'une aire de remise (04) avec des articles (02, 12) s'y trouvant au moins temporairement et prévus pour être remis (26) à la tête de jalousie (30), procédé au cours duquel des articles (02, 12) se trouvant sur l'aire de remise (04) sont, à partir de celle-ci, remis à la tête de jalousie (30), et lesdits articles (02, 12) sont ensuite empilés, à l'aide de la tête de jalousie (30), chacun comme un empilement (13, 14) à un emplacement de pile (10) pour former une pile (11), comprenant les opérations :
- préparation (27, 28), sur l'aire de remise (04), d'au moins un article (02, 12) à mettre en une pile (11) à former, en tant qu'empilement (13, 14),
- remise (26) de l'au moins un article (02, 12), mis à disposition sur l'aire de remise (04), à la tête de jalousie (30) au travers de son ouverture de chargement (31) latérale dès que :
- la tête de jalousie (30) et l'aire de remise (04) ont atteint le même niveau de remise (20) et que
- l'ouverture de chargement (31) de la tête de jalousie (30) se trouve directement devant l'aire de remise (04), et que
- les jalousies (32) peuvent être refermées le plus tôt possible, et
- fermeture (23) des jalousies (32) au plus tard au même moment où débute la remise (26), **caractérisé en ce que**
l'aire de remise (04, 60) elle-même est déplacée dans le sens vertical et amenée à l'encontre de la tête de jalousie (30) à un niveau de remise (20), et que s'effectue un déplacement vertical (24, 21, 25, 22) dans le même sens, synchrone et exempt de différence de niveau, de l'aire de remise (04, 60) et de la tête de jalousie (30) pendant qu'un ou plusieurs articles (02, 12) sont poussés (26) ou pendant leur remise.

2. Procédé selon la revendication 1, un ou plusieurs articles (02, 12) étant mis à disposition (27, 28) à nouveau sur l'aire de remise (04) au plus tard dès qu'est terminée une remise (26) d'un ou plusieurs articles (02, 12) de l'aire de remise (04) à la tête de jalousie (30).

3. Procédé selon la revendication 1 ou 2, la tête de jalousie, qui est prévue pour mettre en une pile (10) des empilements (13, 14) à un emplacement de pile (10), n'effectuant que des mouvements dans le sens vertical (21, 22) entre deux remises (26) d'articles mis à disposition (02, 12) sur l'aire de remise (04).

4. Procédé selon la revendication 1, 2 ou 3, **caractérisé par** un niveau de remise (20) variable.
